(19) Europäisches Patentamt
European Patent Office
Office européen des brevets

(11) **EP 0 749 083 B1**

(12) **FASCICULE DE BREVET EUROPEEN**

(45) Date de publication et mention
de la délivrance du brevet:
**28.08.2002 Bulletin 2002/35**

(51) Int Cl.⁷: **G06F 19/00**, G06F 17/10

(21) Numéro de dépôt: **96401223.1**

(22) Date de dépôt: **07.06.1996**

(54) **Procédé et dispositif de détermination du spectre de fréquence d'un signal**

Verfahren und Einrichtung zur Frequenzspektrumbestimmung eines Signals

Method and device for the determination of the frequency spectrum of a signal

(84) Etats contractants désignés:
**DE FR GB IT**

(30) Priorité: **13.06.1995 FR 9506983**

(43) Date de publication de la demande:
**18.12.1996 Bulletin 1996/51**

(73) Titulaire: **Thales**
**75008 Paris (FR)**

(72) Inventeur: **Barbaresco, Frédéric**
**92402 Courbevoie-Cedex (FR)**

(74) Mandataire: **Beylot, Jacques et al**
**Thomson-CSF Propriété Intellectuelle,**
**13, Avenue du Président Salvador Allende**
**94117 Arcueil Cédex (FR)**

(56) Documents cités:
• **IEEE TRANSACTIONS ON ULTRASONICS, FERROELECTRICS, AND FREQUENCY CONTROL, vol. 42, no. 1, Janvier 1995, NEW YORK, USA, pages 99-110, XP000575361 T.BALDWECK ET AL: "Application of Autoregressive Spectral Analysis for Ultrasound Attenuation Estimation: Interest in Highly Attenuating Medium"**
• **IEEE TRANSACTIONS ON SIGNAL PROCESSING, IEEE PRESS, vol. 41, no. 3, Mars 1993, NEW YORK, USA, pages 1237-1247, XP000364675 W.CAMPBELL ET AL: "Frequency Estimation Performance of Several Weighted Burg Algorithm"**
• **IEEE TRANSACTIONS ON SIGNAL PROCESSING, IEEE PRESS, vol. 40, no. 6, Juin 1992, NEW YORK, USA, pages 1518-1527, XP000305234 J.M.PLIMBEY: "Recursive Autoregressive Spectral Estimation by Minimization of the Free Energy"**
• **IEEE TRANSACTIONS ON SIGNAL PROCESSING, IEEE PRESS, vol. 40, no. 1, Janvier 1992, NEW YORK, USA, pages 249-252, XP000575374 CHI-HSIN WU ET AL: "Numerical Performances of Autoregressive Spectrum Estimators Based on Three-Term Recurrences"**
• **IEEE TRANSACTIONS ON SIGNAL PROCESSING, IEEE PRESS, vol. 39, no. 1, Janvier 1991, NEW YORK, USA, pages 185-189, XP000575373 B.M.BELL ET AL: "A Two Step Burg Algorithm"**
• **PROCEEDINGS OF THE 23RD ASILOMAR CONFERENCE ON SIGNALS, SYSTEMS AND COMPUTERS, MARPLE PRESS, SAN JOSE, CALIFORNIA USA, vol. 2, 30 Octobre 1989 - 1 Novembre 1989, PACIFIC GROVE, CALIFORNIA, USA, pages 1051-1055, XP000590828 J.M.PIMBLEY ET AL: "Recursive Minimum Free Energy Spectral Estimation"**
• **IEEE TRANSACTIONS ON ACOUSTICS, SPEECH, AND SIGNAL PROCESSING, IEEE PRESS, vol. 38, no. 8, Août 1990, NEW YORK USA, pages 1437-1445, XP000148386 HUI-MIN ZHANG ET AL: "An Improved Burg-Type Recursive Lattice Method for Autoregressive Spectral Analysis"**

- IEEE TRANSACTIONS ON SIGNAL PROCESSING, IEEE PRESS, vol. 41, no. 1, Janvier 1993, NEW YORK, USA, pages 403-407, XP000332148 S.DEGERINE: "Sample Partial Autocorrelation Function"
- IEEE TRANSACTIONS ON ACOUSTICS, SPEECH, AND SIGNAL PROCESSING, IEEE PRESS, vol. 38, no. 1, Janvier 1990, NEW YORK, USA, pages 175-177, XP000100760 DINH TUAN PHAM ET AL: "Efficient Computation of Autoregressive Estimates Trough a Sufficient Statistic"
- PROCEEDINGS OF THE 1990 INTERNATIONAL CONFERENCE ON ACOUSTICS, SPEECH AND SIGNAL PROCESSING, IEEE PRESS NEW YORK USA, vol. 5, 3 - 6 Avril 1990, ALBUQUERQUE, NEW MEXICO, USA, pages 2523-2526, XP000575368 TAIKANG NING ET AL: "Power Spectrum Estimation via Orthogonal Transformation"
- PROCEEDINGS OF ELECTRONICOM' 85, IEEE PRESS NEW YORK USA, vol. 3, 7 - 9 Octobre 1985, TORONTO, CANADA, pages 614-617, XP000577571 S.T.NICHOLS ET AL: "A High Resolution Real Time Digital Spectrum Analyze-Theory and Implementation"
- PROCEEDINGS OF IEEE INTERNATIONAL CONFERENCE ON ACOUSTICS, SPEECH, AND SIGNAL PROCESSING, IEEE PRESS NEW YORK USA, vol. 3, 26 - 29 Mars 1985, TAMPA, FLORIDA, USA, pages 1345-1347, XP000575367 P.F.FOUGERE: "Spectrum model-order determination via significant reflection coefficients"

**EP 0 749 083 B1**

**Description**

La présente invention est relative à l'analyse du spectre de fréquence d'un signal physique par une méthode haute résolution plus précise que la transformée de Fourier lorsque l'on ne dispose que d'un nombre réduit d'échantillons du signal. Elle concerne plus particulièrement une méthode d'analyse du spectre de fréquence d'un signal, à modélisation autorégressive, connue sous le nom de méthode du maximum d'entropie de Burg qui a fait l'objet d'articles dont :

[1] Burg J. P., "Maximum entropy spectral analysis," in Proc. 37th Annual Inter. Meeting Society of Exploration Geophysicists (Oklaoma City, OK), Oct 31, 1967,
et qui peut être utilisée dans des domaines très divers et notamment en radar pour le filtrage Doppler et la détection de rupture, c'est à dire d'un événement ne suivant pas la modélisation.

La méthode d'analyse à modélisation autorégressive consiste à modéliser un signal complexe x(t) représenté par une suite d'échantillons complexes $\{x_n\}$ au moyen d'une loi de prédiction permettant de déduire la valeur d'un échantillon $x_n$ à partir d'une combinaison linéaire des valeurs des n-p échantillons précédents de la suite. Elle revient à rechercher une relation de prédiction dans le sens direct, de la forme :

$$x_n = \varepsilon_{f,n,p} - \sum_{k=1}^{p} a_{p,k}.x_{n-k} \qquad (1)$$

où p est l'ordre du modèle, c'est à dire le nombre d'échantillons précédents de la suite pris en compte dans la prédiction, $\{a_{p,k}\}$ une suite de p coefficients complexes définissant le modèle et $\varepsilon_{f,n,p}$ une erreur de prédiction dans le sens directe, par le modèle d'ordre p, de l'échantillon $x_n$, qui doit être assimilable à un bruit blanc si le modèle est fidèle.

La modélisation est dite autorégressive car, en l'absence de bruit et d'erreurs de mesure sur les échantillons, elle est d'autant plus fidèle que l'ordre p du modèle est élevé. En pratique les bruits et erreurs de mesure font diverger la modélisation de sorte que l'on cherche à limiter l'ordre p de modélisation à la valeur la plus faible pour laquelle l'erreur de modélisation est assimilable à un bruit blanc.

La modélisation permet de connaître le spectre de fréquence d'un signal x(t) échantillonné régulièrement. En effet, on peut déduire de la relation (1), la relation :

$$\varepsilon_{f,n,p} = \sum_{k=0}^{p} a_{p,k}.x_{n-k} \qquad (2)$$

avec $a_{p,0} = 1$, qui devient par transformée de Fourier de ses deux membres :

$$\mathrm{E}_{f,n,p}(f) = \left( \sum_{k=0}^{p} a_{p,k}.e^{-j2\pi kf} \right) X(f)$$

avec :

$$\varepsilon_{f,p,n}(t) \xrightarrow{\ TF\ } \mathrm{E}_{f,p,n}(f)$$
$$x(t) \xrightarrow{\ TF\ } X(f)$$

On en déduit :

$$\left|\mathrm{E}_{f,p,n}(f)\right|^2 = \left|\sum_{k=0}^{p} a_{p,k}.e^{-j2\pi kf}\right|^2 \times \left|X(f)\right|^2$$

En supposant que le modèle est fiable, c'est-à-dire que $\varepsilon_{f,n,p}$ est un bruit blanc, on peut poser :

$$\left|\mathrm{E}_{f,n,p}(f)\right|^2 = P_{f,n,p}$$

où $P_{f,n,p}$ est la puissance de l'erreur de prédiction directe du modèle d'ordre p pour l'échantillon $x_n$. Il vient alors :

$$\left|X(f)\right|^2 = \frac{P_{f,n,p}}{\left|\sum_{k=0}^{p} a_{p,k}.e^{-j2\pi kf}\right|^2}$$

qui est l'expression de la puissance du spectre de fréquence du signal échantillonné x(t) et qui montre que cette dernière se déduit des valeurs de la suite des coefficients $\{a_{p,k}\}$ du modèle.

Le modèle autorégressif défini par la suite des coefficients $\{a_{p,k}\}$ de la loi de prédiction dans le sens direct de l'échantillon $x_n$ en fonction des n-p échantillons précédents a également la propriété, qui sera utilisée dans la suite, de correspondre à une loi de prédiction dans le sens rétrograde de l'échantillon $x_{n-p}$ en fonction des n-p échantillons suivants. Car on a également :

$$x_{n-p} = \varepsilon_{b,n,p} - \sum_{k=1}^{p} a_{p,k}^{*}.x_{n-p+k}$$

où $*$ désigne l'opérateur conjugué et $\varepsilon_{b,n,p}$ une erreur de prédiction dans le sens rétrograde du modèle d'ordre p sur la valeur de l'échantillon $x_{n-p}$.

Les méthodes d'analyse spectrale à modèle autorégressif pose le problème de la détermination de la suite des coefficients complexes $\{a_{p,k}\}$ définissant le modèle adopté.

Une solution connue est la méthode des moindres carrés qui se base sur une minimisation de la somme des carrés des erreurs de prédiction dans le sens direct $\varepsilon_{f,n,p}$ pour n variant de 0 à N-p+1, les échantillons $x_n$ étant supposés nuls en dehors de l'intervalle [1, N]. On a, d'après la relation (2) :

$$\sum_{n}\left|\varepsilon_{f,n,p}\right|^2 = \sum_{n}\left|\sum_{k=0}^{p} a_{p,k}.x_{n-k}\right|^2 \qquad (3)$$

Pour minimiser cette somme de carrés d'erreurs, il faut annuler ses dérivées par rapport à la suite $\{a_{p,k}\}$ des coefficients du modèle, ce qui se traduit par le système d'équations linéaires :

$$\sum_{k=0}^{p} a_{p,k}\left(\sum_{n} x_{n-k}.x_{n-j}^{*}\right) = 0 \qquad \forall j \in [1,...,p]$$

ou encore, puisque $a_{p,0}$ est égal à un par définition :

$$\sum_{n} x_{n}.x_{n-j}^{*} = -\sum_{k=1}^{p} a_{p,k}\left(\sum_{n} x_{n-k}.x_{n-j}^{*}\right) \qquad \forall j \in [1,...,p]$$

En posant:

$$c_{i} = \sum_{n} x_{n}.x_{n-i}^{*} \qquad (4)$$

$$C_{p} = \left[c_{1},...,c_{p}\right]^{T} \qquad (5)$$

$$A_{p} = \left[a_{p,1},...,a_{p,p}\right]^{T} \qquad (6)$$

T étant l'opérateur de transposition, et :

$$\Omega_{p} = \begin{bmatrix} c_{0} & c_{1}^{*} & . & . & c_{p-1}^{*} \\ c_{1} & c_{0} & c_{1}^{*} & . & c_{p-2}^{*} \\ . & . & . & . & . \\ c_{p-1} & c_{p-2} & . & . & c_{0} \end{bmatrix}$$

on peut réécrire le système d'équations sous une forme matricielle et aboutir à l'équation normale de Yule-Walker :

$$\Omega_{p}A_{p} = -C_{p} \qquad (7)$$

d'où l'on tire la valeur du vecteur $A_{p}$ des coefficients du modèle d'ordre p :

$$A_{p} = -\Omega_{p}^{-1}C_{p}$$

-1 étant l'opérateur d'inversion.

On voit que la méthode des moindres carrés nécessite une estimation d'une matrice d'autocorrélation $\Omega_p$ d'ordre p et son inversion ce qui représente un nombre élevé de calculs.

Pour diminuer le nombre de calculs, Levinson a recherché une formule de récurrence sur l'ordre du modèle. Pour ce faire, il a eu recours à l'opérateur suivant :

$$V^{(-)} = J.V*$$

où J est la matrice unité antidiagonale. Avec cet opérateur, la matrice d'autocorrélation $\Omega_p$ d'ordre p peut être réécrite, en fonction de la matrice d'autocorrélation $\Omega_{p-1}$ d'ordre p-1, de la manière suivante :

$$\Omega_p = \begin{bmatrix} \Omega_{p-1} & C_{p-1}^{(-)} \\ C_{p-1}^{(-)+} & c_0 \end{bmatrix}$$

où + est l'opérateur transconjugué. En notant $A_p^m$ les m premiers coefficients du modèle d'ordre p, on peut écrire :

$$A_p = \begin{bmatrix} A_p^{p-1}, a_{p,p} \end{bmatrix}$$

ce qui permet de mettre l'équation normale de Yule-Walker sous la forme :

$$\begin{bmatrix} \Omega_{p-1} & C_{p-1}^{(-)} \\ C_{p-1}^{(-)+} & c_0 \end{bmatrix} \times \begin{bmatrix} A_p^{p-1} \\ a_{p,p} \end{bmatrix} = - \begin{bmatrix} C_{p-1} \\ c_p \end{bmatrix}$$

On en tire une première équation matricielle :

$$\Omega_{p-1}.A_p^{p-1} + a_{p,p}.C_{p-1}^{(-)} = -C_{p-1}$$

que l'on transforme en :

$$A_p^{p-1} + a_{p,p}.\Omega_{p-1}^{-1}.C_{p-1}^{(-)} = -\Omega_{p-1}^{-1}.C_{p-1}$$

En remarquant, d'après la relation (7) et la définition de l'opérateur (-) que :

$$A_{p-1} = -\Omega_{p-1}^{-1}.C_{p-1}$$

et que :

$$A_{p-1}^{(-)} = -\Omega_{p-1}^{-1}.C_{p-1}^{(-)}$$

il vient :

$$A_p^{p-1} = A_{p-1} + a_{p,p}.A_{p-1}^{(-)}$$

D'où une relation de récurrence sur les coefficients des modèles en fonction de leur ordre :

$$a_{p,k} = a_{p-1,k} + a_{p,p}.a*_{p-1,p-k}$$

qui permet de déterminer les coefficients d'un modèle d'ordre p à partir des coefficients du modèle d'ordre immédiatement inférieur p-1 à condition d'avoir déterminé au préalable le dernier coefficient $a_{p,p}$ et, par conséquent d'utiliser une structure de calcul récursive sur l'ordre pour les calculs de tous les coefficients d'un modèle à l'exception du dernier. Malheureusement, la détermination du dernier coefficient $a_{p,p}$ est délicate car elle met en oeuvre les équations restantes du système d'équations normales de Yule-Walker.

La méthode d'analyse spectrale à modèle autorégressif de Burg reprend l'approche de Levinson pour la détermination des p-1 premiers coefficients d'un modèle de prédiction d'ordre p mais remplace la détermination du dernier coefficient $a_{p,p}$ par une estimation sous une contrainte de moindre carré utilisant la somme des énergies des erreurs de prédiction linéaire directe et rétrograde. Ces dernières sont données par :

$$\begin{cases} \varepsilon_{f,n,p} = x_n + \sum_{k=1}^{p} a_{p,k}.x_{n-k} \\ \varepsilon_{b,n,p} = x_n + \sum_{k=1}^{p} a_{p,k}^{*}.x_{n-p+k} \end{cases}$$

ce qui, en tenant compte de la relation de récurrence de Levinson :

$$a_{p,k} = a_{p-1,k} + \mu_p.a*_{p-1,p-k}$$

où $\mu_p$ est une estimation du coefficient $a_{p,p}$ appelée coefficient de réflexion, conduit aux relations de récurrence :

$$\begin{cases} \varepsilon_{f,n,p+1} = \varepsilon_{f,n,p} + \mu_{p+1}.\varepsilon_{b,n-1,p} \\ \varepsilon_{b,n,p+1} = \varepsilon_{b,n-1,p} + \mu_{p+1}^{*}.\varepsilon_{f,n,p} \end{cases} \qquad n = p+2,.....,N \qquad (8)$$

La moyenne de la somme des énergies d'erreur vaut :

$$P_{p+1} = \frac{1}{2}\left(P_{f,p+1} + P_{b,p+1}\right) = \frac{1}{2(N-p+1)} \sum_{n=p+2}^{N} \left[\left|\varepsilon_{f,n,p+1}\right|^2 + \left|\varepsilon_{b,n,p+1}\right|^2\right]$$

Le coefficient $\mu_{p+1}$ qui minimise cette moyenne de somme d'énergies est tel que :

$$\frac{\delta P_{p+1}}{\delta \mu_{p+1}} = 0$$

ce qui entraîne, en substituant dans la formule de $P_{p+1}$ les expressions des erreurs de prédiction directe et rétrograde à l'ordre immédiatement inférieur p, la relation :

$$\mu_{p+1} = \frac{-2 \sum_{n=p+2}^{N} \varepsilon_{f,n,p} \cdot \varepsilon_{b,n-1,p}^{*}}{\sum_{n=p+2}^{N} \left[ \left| \varepsilon_{f,n,p} \right|^2 + \left| \varepsilon_{b,n-1,p} \right|^2 \right]} \qquad (9)$$

Pour le calcul des termes d'erreurs de prédiction directe et rétrograde figurant au numérateur et dénominateur de la relation précédente (9) de définition d'un coefficient de réflexion, on met en application les relations (8) entre les erreurs de prédiction faisant intervenir une récurrence sur l'ordre du modèle initialisée à partir de l'échantillon de signal $x_n$, cela au moyen d'une structure de calculateur en filtre en treillis. Cette structure en filtre en treillis impose pour éviter que les erreurs divergent avec une augmentation de l'ordre du modèle, que le filtre inverse soit stable, ce qui implique que le module du coefficient de réflexion soit inférieur à un.

Le choix d'une structure de calculateur en treillis plutôt que d'une structure transverse présente le triple avantage d'une implémentation matérielle simplifiée et d'une meilleure robustesse vis-à-vis des bruits de troncature et des bruits de mesure.

Une application importante, en radar, de l'analyse spectrale à modèle autorégressif par la méthode du maximum d'entropie de Burg est la discrimination de la signature spectrale du fouillis par rapport à celle des cibles. Cette application nécessite de pouvoir moyenner spatialement sur plusieurs cases de résolution distance et sur plusieurs azimuts car le fouillis se différencie des cibles par une corrélation spatio-doppler étendue. Un segment de données radar est défini comme un ensemble de récurrences cohérentes en Doppler provenant d'une même cellule de résolution du radar. Une corrélation spatiale des données implique l'utilisation de segments de données provenant de cellules de résolution adjacentes en distance et en azimut. La difficulté dans la combinaison de ces segments de données réside dans la discontinuité temporelle entre les différents segments. A cause de cette discontinuité, les échantillons ne peuvent pas être simplement recombinés pour donner une unique chaîne de données prise comme signal d'entrée pour l'algorithme de Burg. Pour résoudre ce problème, Haykin a proposé dans un article :

[2] Haykin S., Currie B. W., Kesler S. B., "Maximum entropie spectral analysis of radar clutter", Proceeding of the IEEE, vol. 70, n°9, pp.953-962, Sept. 1982,
une version multisegment de l'algorithme de Burg. Cela consiste à modifier l'algorithme de Burg pour définir autant de filtres en treillis que de segments et, à chaque étape un coefficient de réflexion commun calculé pour minimiser la somme des erreurs de chaque filtre. On effectue alors la procédure d'estimation du coefficient de réflexion sous une contrainte de moindre carré sur la moyenne des énergies des erreurs de prédiction sur l'ensemble des segments. Le coefficient de réflexion est ensuite réinjecté dans les différents filtres à structure en treillis. Supposons accessibles pour l'analyse I segments disjoints d'échantillons :

$$\{x_n\}_i \qquad \text{avec i=1,....,I et } N = \sum_{i=1}^{I} N_i$$

On définit I filtres treillis ayant des erreurs de prédiction linéaire directe et rétrograde :

$$\begin{cases} \varepsilon_{f,i,n,p+1} = \varepsilon_{f,i,n,p} + \mu_{p+1} \cdot \varepsilon_{b,i,n-1,p} \\ \varepsilon_{b,i,n,p+1} = \varepsilon_{b,i,n-1,p} + \mu_{p+1}^{*} \cdot \varepsilon_{f,i,n,p} \end{cases}$$

avec n = p+2, p+3, ..., $N_i$ et i = 1, 2, ..., I.
La moyenne spatio-arithmétique de la somme des énergies d'erreur sur les I segments donne :

$$P_{I,p+1} = \frac{1}{I}\sum_{i=1}^{I} P_{i,p+1} = \sum_{i=1}^{I}\frac{1}{2(N_i - p - 1)I}\sum_{n=p+2}^{N_i}\left[\left|\varepsilon_{f,i,n,p+1}\right|^2 + \left|\varepsilon_{b,i,n,p+1}\right|^2\right]$$

En substituant dans la formule précédente les expressions des erreurs de prédiction directe et rétrograde à l'ordre immédiatement inférieur p et en écrivant que la valeur recherchée du coefficient de réflexion $\mu_{I,p+1}$ annule l'expression :

$$\frac{\delta P_{I,p+1}}{\delta\mu_{I,p+1}} = 0$$

il vient:

$$\mu_{I,p+1} = \frac{-2\sum_{i=1}^{I}\sum_{n=p+2}^{N_i}\varepsilon_{f,i,n,p}\cdot\varepsilon_{b,i,n-1,p}^*}{\sum_{i=1}^{I}\sum_{n=p+2}^{N_i}\left[\left|\varepsilon_{f,i,n,p}\right|^2 + \left|\varepsilon_{b,i,n-1,p}\right|^2\right]}$$

Dans une analyse spectrale à modèle autorégressif par la méthode du maximum d'entropie de Burg, comme par la méthode des moindres carrés, le choix de l'ordre du modèle de prédiction est un problème crucial qui a des conséquences directes sur la résolution de l'analyse spectrale. Un ordre faible délivrera un spectre de fréquence lissé gommant des pics existants tandis qu'un ordre trop important induira des pics parasites dans le spectre de fréquence. De nombreux critères statistiques ont été proposés pour estimer l'ordre optimal auquel il est préférable de s'arrêter :

- des critères basés sur l'énergie de l'erreur de prédiction (critères de Akaike, de Hannan, de Rissanen),
- des critères basés sur la blancheur du résidu (test statistique de porte manteau, mesure de l'aplatissement du spectre),
- des critères basés sur une optimisation d'un compromis entre un terme de biais et un terme de variance.

Ces critères statistiques, parfois coûteux en calculs, sont limités aux cas où l'horizon d'analyse est important. En effet, ils présupposent une répartition normale des erreurs qui, lorsqu'elle n'est pas vérifiée, notamment en cas d'un horizon d'analyse court, rend inconsistante l'estimation sous-jacente de l'ordre du modèle autorégressif.

Dans certaines applications, comme celles liées au radar, l'incertitude sur la détermination de l'ordre du modèle autorégressif peut être grande en raison d'un l'horizon d'observation qui est extrêmement court.

Pour résoudre ce problème d'estimation de l'ordre du modèle de prédiction d'un processus d'analyse spectrale autorégressive, Kitagawa et Gersch ont proposé dans leurs articles :

[3] Kitagawa G., Gersch W., "A smoothness prior Time-varying AR coefficient modeling of nonstationary covariance time series", IEEE Trans. AC-30, n°1, pp. 48-56, January 1985,
[4] Kitagawa G., Gersch W., "A smoothness prior long AR model method for spectral estimation", IEEE Trans. AC-30, n°1, pp. 57-65, January 1985,

une solution dans le cadre de la méthode des moindres carrés connue sous la dénomination de méthode des moindres carrés régularisés. Cette solution consiste à rajouter au critère des moindres carrés une fonction régularisante tendant à imposer une variation douce au spectre de puissance déduit des coefficients du modèle de prédiction afin de permettre d'atteindre l'ordre maximum du modèle sans laisser se développer les pics parasites dans le spectre de puissance. Au lieu de minimiser le critère simple des moindres carrés $J(A_p)$ dont l'expression reprise de la relation (3) est :

$$J\left(A_p\right) = \sum_n \left| \sum_{k=0}^{p} a_{p,k} . x_{n-k} \right|^2 \qquad \text{avec } A_p = \left[a_{p,1},\ldots,a_{p,p}\right]^T$$

on minimise un critère :

$$I\left(A_p\right) = J\left(A_p\right) + R\left(A_p\right)$$

où $R(A_p)$ est une fonction régularisante déduite de la fonction de transfert $H_p(f)$ du filtre correspondant à la loi de prédiction d'un modèle d'ordre p :

$$H_p(f) = \sum_{k=0}^{p} a_{p,k} e^{-j2\pi kf}$$

au moyen de la relation suivante :

$$R\left(A_p\right) = \sum_k \lambda_k . R_{p,k} \qquad \text{avec} \quad R_{p,k} = \int_{-1/2}^{1/2} \left| \frac{d^k H_p(f)}{df^k} \right|^2 . df$$

En se limitant aux deux premiers ordres il vient :

$$R\left(A_p\right) = \lambda_0 \int_{-1/2}^{1/2} \left| H_p(f) \right|^2 . df + \lambda_1 \int_{-1/2}^{1/2} \left| \frac{dH_p(f)}{df} \right|^2 . df$$

ou encore :

$$R\left(A_p\right) = \lambda_0 \sum_{k=0}^{p} a_{p,k}^2 + \lambda_1 (2\pi)^2 \sum_{k=1}^{p} k^2 a_{p,k}^2 = \sum_{k=0}^{p} \left[ \lambda_0 + \lambda_1 (2\pi)^2 k^2 \right] . a_{p,k}^2$$

La méthode des moindres carrés appliquée à ce critère $I(A_p)$ donne les coefficients $a_{p,k}$ du modèle d'ordre p comme solution du système de p équations linéaires :

$$\frac{dI\left(A_p\right)}{da_{p,j}} = \frac{dJ\left(A_p\right)}{da_{p,j}} + \frac{dR\left(A_p\right)}{da_{p,j}} = 0 \qquad \forall j \in \left[1,\dots,p\right]$$

qui peut se mettre sous la forme :

$$\sum_{k=0}^{p} a_{p,k}\left(\sum_n x_{n-k}.x_{n-j}^{\bullet}\right) + 2\left(\lambda_0 + \lambda_1.(2\pi)^2.j^2\right)a_{p,j} = 0 \qquad \forall j \in \left[1,\dots,p\right]$$

En notant D la matrice diagonale définie par :

$$D = Diag\left\{\left[\lambda_0 + \lambda_1.(2\pi)^2.p^2\right]^{\frac{1}{2}},\dots,\left[\lambda_0 + \lambda_1.(2\pi)^2\right]^{\frac{1}{2}}\right\}$$

et en reprenant les notations vectorielles et matricielles des relations (4, 5 et 6) on peut réécrire le système d'équations donnant les coefficients du modèle de prédiction d'ordre p sous la forme matricielle apparentée à l'équation normale de Yule-Walker :

$$\left(\Omega_p + D^T.D\right)A_p = -C_p$$

D'où :

$$A_p = -\left(\Omega_p + D^T.D\right)^{-1}.C_p$$

On voit donc que la régularisation revient à ajouter aux des termes diagonaux de la matrice d'autocorrélation $\Omega_p$ d'ordre p mesurée, des termes de régularisation avant de l'inverser. Cet ajout permet de rendre cette matrice d'autocorrélation positive semi-définie pour lui conserver un caractère physique qu'elle peut avoir perdu en raison des erreurs de mesure.

Pour optimiser les coefficients $\lambda_0$ et $\lambda_1$ au sens du maximum de vraisemblance, on observe que le critère des moindres carrés régularisés aboutit à la maximisation du terme :

$$\exp\left\{-\frac{1}{2P_p}\left(J\left(A_p\right) + R\left(A_p\right)\right)\right\}$$

avec une loi a posteriori définie par la distribution conditionnelle des données

$$f\left(x/A_p,P_p\right) = k_1 \exp\left\{-\frac{1}{2P_p}\left[J\left(A_p\right)\right]\right\}$$

et une loi a priori

$$f\left(A_p/\lambda_0,\lambda_1,P_p\right) = k_2 \exp\left\{-\frac{1}{2P_p}\left[R\left(A_p\right)\right]\right\}$$

Les lois étant gaussiennes, la vraisemblance de ces paramètres $\lambda_0$ et $\lambda_1$ est également gaussienne et est obtenue par intégration :

$$V\left(P_p,\lambda_0,\lambda_1/x\right) = \int f\left(x/A_p,P_p\right).f\left(A_p/\lambda_0,\lambda_1,P_p\right).dA_p$$

et la maximisation de

$$Log\left[V\left(P_p,\lambda_0,\lambda_1/x\right)\right]$$

donne les valeurs optimales des coefficients $\lambda_0$ et $\lambda_1$.

Ces paramètres $\lambda_0$ et $\lambda_1$ sont choisis en fonction du type d'application pour un bruit de mesure donné mais sont peu sensibles à des erreurs d'un facteur 10. Par exemple, pour une application de détermination de spectre Doppler en technique radar, le paramètre $\lambda_0$ peut être pris de l'ordre de 1 et le paramètre $\lambda_1$ de l'ordre de 0,001.

La méthode des moindres carrés régularisés développée par Kitagawa et Gersch permet de choisir un ordre de modèle de prédiction élevé sous une contrainte de douceur spectrale. Cependant, elle ne convient pas quand le nombre d'échantillons disponibles de signal est faible. Dans ce cas, la méthode du maximum d'entropie de Burg est préférable car elle est plus simple à implémenter (pas d'inversion de matrice mais uniquement des calculs linéaires) et plus robuste face aux bruits de calcul et aux erreurs de quantification et d'arrondis.

Pour régulariser la méthode du maximum d'entropie de Burg, Silverstein et Pimbley ont proposé dans l'article : [5] Silverstein S. D., Pimbley J. M. "The minimum free energy regularisation convection : Linear-MFE", Marple Press, 23 ACSSC, pp.365-370, 1989 une approche par minimum d'énergie libre.

On a vu précédemment que les coefficients $a_{p,k}$ d'un modèle de prédiction autorégressif d'ordre p et les coefficients $a_{p-1,k}$ du modèle de prédiction autorégressif d'ordre immédiatement inférieur p-1 étaient liés par la condition de Levinson :

$$a_{p,k} = a_{p-1,k} + \mu_p.a^*_{p-1,p-k} \qquad \forall k \in [1,...,p\text{-}1]$$

avec :

$$a_{p,p} = \mu_p \qquad \text{et} \qquad a_{j,0} = 1 \qquad \forall j \in [1,...,p]$$

Pour les fonctions de transfert $H_p(p)$ et $H_{p-1}(f)$ des filtres prédictifs associés aux modèles :

$$H_p(f) = \sum_{k=0}^{p} a_{p,k} . e^{-j2\pi kf} \qquad\qquad H_{p-1}(f) = \sum_{k=0}^{p-1} a_{p-1,k} . e^{-j2\pi kf}$$

cela conduit à une relation de récurrence de la forme :

$$H_p(f) = H_{p-1}(f) + \mu_p . e^{-j2\pi pf} . H^*_{p-1}(f)$$

L'idée est de modifier le critère minimisé par Burg qui est la moyenne des puissances d'erreur de prédiction directe et rétrograde :

$$U_p = P_p = \frac{1}{2.(N-p)} \sum_{n=p+1}^{N} \left( \left| \varepsilon_{f,n,p} \right|^2 + \left| \varepsilon_{b,n,p} \right|^2 \right)$$

par un terme correctif $L_p$ :

$$L_p = \int_{-1/2}^{1/2} \ln \left[ \frac{P_p}{\left| H_p(f) \right|^2} \right] . df$$

de sorte que l'on se retrouve avec un nouveau critère à minimiser de la forme :

$$E_p = U_p - \alpha L_p$$

appelé énergie libre par référence avec un système physique pour lequel $U_p$ représenterait l'énergie, $L_p$ l'entropie et $\alpha$ la température effective.
Le choix du coefficient de réflexion $\mu_p$ minimisant ce nouveau critère est tel que l'on ait :

$$\frac{dE_p}{d\mu_p} = \frac{dU_p}{d\mu_p} - \alpha \frac{dL_p}{d\mu_p} = 0$$

ce qui conduit à la résolution d'une équation à coefficients réels du troisième degré en $\gamma_p$ de la forme :

$$\left( 1 - \gamma_p^2 \right) . \left( \gamma_p . G_p + \left| D_p \right| \right) = -2\alpha\gamma_p \qquad\qquad (10)$$

avec :

$$\begin{cases} G_p = \dfrac{1}{N-p} \sum_{n=p+1}^{N} \left[ \left| \varepsilon_{f,n,p-1} \right|^2 + \left| \varepsilon_{b,n-1,p-1} \right|^2 \right] \\[4mm] D_p = \dfrac{2}{N-p} \sum_{n=p+1}^{N} \varepsilon_{b,n-1,p-1} \cdot \varepsilon_{f,n,p-1}^{*} \\[4mm] \mu_p = \dfrac{\gamma_p \cdot D_p^{*}}{\left| D_p \right|} \end{cases}$$

$$(11)$$

On remarque que pour $\alpha$ égal zéro, on retrouve la solution classique de Burg. En effet, le polynôme a alors trois racines :+1, -1 et -$|D_p|/G_p$ de sorte que l'on a trois valeurs possibles pour le coefficient de réflexion $\mu_p$

$$\mu_p = + \frac{D_p^{*}}{|D_p|}, \; - \frac{D_p^{*}}{|D_p|}, \; - \frac{D_p^{*}}{G_p}$$

Comme on souhaite que $\mu_p$ soit strictement inférieur en norme à 1, seule la dernière valeur convient

$$\mu_p = - \frac{D*p}{G_p}$$

Dans le cas où $\alpha \neq 0$, on montre qu'il n'existe qu'une seule solution donnant un coefficient de réflexion dont le module soit strictement inférieur à 1.

La régularisation de l'algorithme de Burg par l'approche du minimum d'énergie libre développée par Silverstein et Pimbley consiste donc à : calculer les termes $D_p$ et $G_p$ à partir de leurs définitions des relations (11), établir l'équation du troisième degré en $\gamma_m$ de la relation (10), calculer les trois racines de cette équation, sélectionner celle $\gamma_{m0}$ dont le module est strictement inférieur à un, calculer le coefficient de réflexion $\mu_p$ à partir de la relation :

$$\mu_p = \gamma_{m0} \frac{D*p}{|D_p|}$$

et calculer les coefficients $a_{p,k}$ du modèle par la relation de récurrence habituelle :

$$a_{p,k} = a_{p-1,k} + \mu_p \cdot a*_{p-1,p-k}$$

Par rapport à la méthode de Burg non régularisée, elle demande un surcroît de calcul consistant à la recherche des racines de l'équation du troisième degré en $\gamma_m$.

La présente invention a pour but une autre manière de régulariser la méthode de Burg qui soit moins contraignante du point de vue calcul. Car on n'a vu que, si ce n'était ce besoin de régularisation, la méthode de Burg avait, par rapport à la méthode des moindres carrés le triple avantage d'être implantable en temps réel, à un coût calculatoire faible, avec une structure en treillis, d'être généralisable au cas multisegment introduit par Haykin dans le cas du filtrage fréquentiel ou du lissage temporel de l'analyse spectrale et d'être robuste face au bruit de calcul, aux erreurs de quantification et d'arrondis.

La présente invention a pour objet un premier procédé de détermination du spectre de fréquence d'un signal

échantillonné $\{x_n\}$ consistant à évaluer les coefficients $\{a_{p,k}\}$ d'un modèle de prédiction d'ordre p qui correspondent à une loi de prédiction du $n^{\text{ième}}$ échantillon $x_n$ à partir des n-p échantillons précédents $\{x_{n-k}\}$, k variant de 1 à p, de la forme :

$$x_n = \varepsilon_{f,n,p} - \sum_{k=1}^{p} a_{p,k} \cdot x_{n-k}$$

où $\varepsilon_{f,n,p}$ est une erreur de prédiction, dans le sens direct, par le modèle d'ordre p, de l'échantillon $x_n$, et qui donnent une estimation de la puissance du spectre de fréquence du signal échantillonné sous la forme :

$$\left|X(f)\right|^2 = \frac{P_p}{\left|\sum_{k=0}^{p} a_{p,k} \cdot e^{-j2\pi kf}\right|^2}$$

où $a_{p,0}$ vaut 1 et où $P_p$ est la puissance de l'erreur de prédiction directe du modèle d'ordre p pour l'échantillon $x_n$ lorsque le modèle est fiable c'est à dire que la dite erreur est un bruit blanc, à partir d'une loi de récurrence sur l'ordre p du modèle de la forme :

$$a_{p,k} = a_{p-1,k} + \mu_p \cdot a*_{p-1,p-k}$$

$*$désignant l'opérateur conjugué,
avec :

$$a_{p,0} = 1$$

$$a_{p-1,0} = 1$$

$$k \in [1,...p\text{-}1]$$

$\mu_p$ étant un coefficient de réflexion déterminé à partir des termes :

$$\begin{cases} D_p = \dfrac{2}{N-p} \displaystyle\sum_{n=p+1}^{N} \varepsilon_{b,n-1,p-1} \cdot \varepsilon^*_{f,n,p-1} \\ G_p = \dfrac{1}{N-p} \displaystyle\sum_{n=p+1}^{N} \left[ \left|\varepsilon_{f,n,p-1}\right|^2 + \left|\varepsilon_{b,n-1,p-1}\right|^2 \right] \end{cases}$$

où $\varepsilon_{f,n,p-1}$ désigne l'erreur de prédiction, dans le sens direct, par le modèle de prédiction d'ordre p - 1, sur l'échantillon $x_n$ et $\varepsilon_{b,n-1,p-1}$ l'erreur de prédiction, dans le sens rétrograde, par le modèle d'ordre p - 1, sur l'échantillon $x_{n-p}$ :

$$x_{n-p} = \varepsilon_{b,n-1,p-1} - \sum_{k=1}^{p-1} a^*_{p-1,k}.x_{n-p+k}$$

Ce procédé est remarquable en ce que le coefficient de réflexion $\mu_p$ est déterminé par une relation de la forme :

$$\mu_p = -\frac{D^*_p + 2\sum_{k=1}^{p-1}\left[\lambda_0 + \lambda_1.(2\pi)^2.(k-p)^2\right].a_{p-1,k}.a_{p-1,p-k}}{G_p + 2\sum_{k=0}^{p-1}\left[\lambda_0 + \lambda_1.(2\pi)^2.(k-p)^2\right].\left|a_{p-1,k}\right|^2}$$

où $\lambda_0$ et $\lambda_1$ sont des coefficients réels positifs.

L'invention a également pour objet un deuxième procédé de détermination du spectre de fréquence de la moyenne d'une famille de I signaux échantillonnés $\{x_n\}_i$ consistant à évaluer les coefficients $\{a_{p,k}\}$ d'un modèle de prédiction d'ordre p qui correspondent à une loi de prédiction du $n^{ième}$ échantillon $x_{i,n}$ à partir des n-p échantillons précédents $\{x_{i,n-k}\}$, k variant de 1 à p, de la forme :

$$x_{i,n} = \varepsilon_{f,i,n,p} - \sum_{k=1}^{p} a_{p,k}.x_{i,n-k} \qquad i \in [1,...,I]$$

où $\varepsilon_{f,i,n,p}$ est une erreur de prédiction, dans le sens direct, par le modèle d'ordre p, de l'échantillon $x_{i,n}$ du signal i et qui donnent une estimation de la moyenne des puissances des spectres de fréquence des signaux échantillonnés sous la forme :

$$\left|X(f)\right|^2 = \frac{P_{I,p}}{\left|\sum_{k=0}^{p} a_{p,k}.e^{-j2\pi kf}\right|^2}$$

où $a_{p,0}$ vaut 1 et où $P_{I,p}$ est la moyenne des puissances des erreurs de prédiction directe du modèle d'ordre p pour les $n^{ièmes}$ échantillons $x_{i,n}$ des I signaux lorsque le modèle est fiable c'est-à-dire que les dites erreurs sont des bruits blancs, à partir d'une loi de récurrence sur l'ordre p du modèle de la forme :

$$a_{p,k} = a_{p-1,k} + \mu_{I,p}.a^*_{p-1,}p-k$$

∗ désignant l'opérateur conjugué,
avec:

$$a_{p,0} = 1$$

$$a_{p-1,0} = 1$$

$$k \in [1,...p\text{-}1]$$

$\mu_{I,p}$ étant un coefficient de réflexion déterminé à partir des termes :

$$\begin{cases} D_{I,p} = \dfrac{2}{(N-p)I} \sum_{i=1}^{I} \sum_{n=p+1}^{N} \varepsilon_{b,i,n-1,p-1} \cdot \varepsilon^{*}_{f,i,n,p-1} \\[2em] G_{I,p} = \dfrac{1}{(N-p)I} \sum_{i=1}^{I} \sum_{n=p+1}^{N} \left[ \left| \varepsilon_{f,i,n,p-1} \right|^2 + \left| \varepsilon^{*}_{b,i,n-1,p-1} \right|^2 \right] \end{cases}$$

où $\varepsilon_{f,i,n,p-1}$ désigne l'erreur de prédiction, dans le sens direct, par le modèle de prédiction d'ordre p - 1, sur le n$^{\text{ième}}$ échantillon du i$^{\text{ème}}$ signal et $\varepsilon_{b,i,n-1,p-1}$ l'erreur de prédiction, dans le sens rétrograde, par le modèle d'ordre p - 1, sur le n-p$^{\text{ième}}$ échantillon du i$^{\text{ème}}$ signal :

$$x_{i,n-p} = \varepsilon_{b,i,n-1,p-1} - \sum_{k=1}^{p-1} a^{*}_{p-1,k} \cdot x_{n-p+k}$$

Ce procédé est remarquable en ce que le coefficient de réflexion $\mu_{I,p}$ est déterminé par une relation de la forme :

$$\mu_{I,p} = - \frac{D^{*}_{I,p} + 2 \sum_{k=1}^{p-1} \left[ \lambda_0 + \lambda_1 . (2\pi)^2 . (k-p)^2 \right] . a_{p-1,k} . a_{p-1,p-k}}{G_{I,p} + 2 \sum_{k=0}^{p-1} \left[ \lambda_0 + \lambda_1 . (2\pi)^2 . (k-p)^2 \right] . \left| a_{p-1,k} \right|^2}$$

où $\lambda_0$ et $\lambda_1$ sont des coefficients réels positifs.

L'invention a également pour objet un dispositif de mise en oeuvre du premier procédé précité.

D'autres caractéristiques et avantages de l'invention ressortiront de la description ci-après d'un mode de réalisation donné à titre d'exemple. Cette description sera faite en regard du dessin dans lequel :

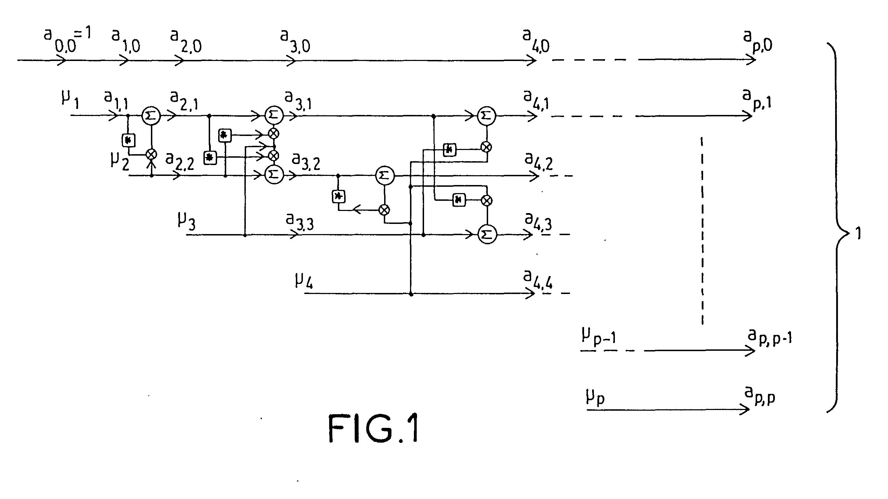

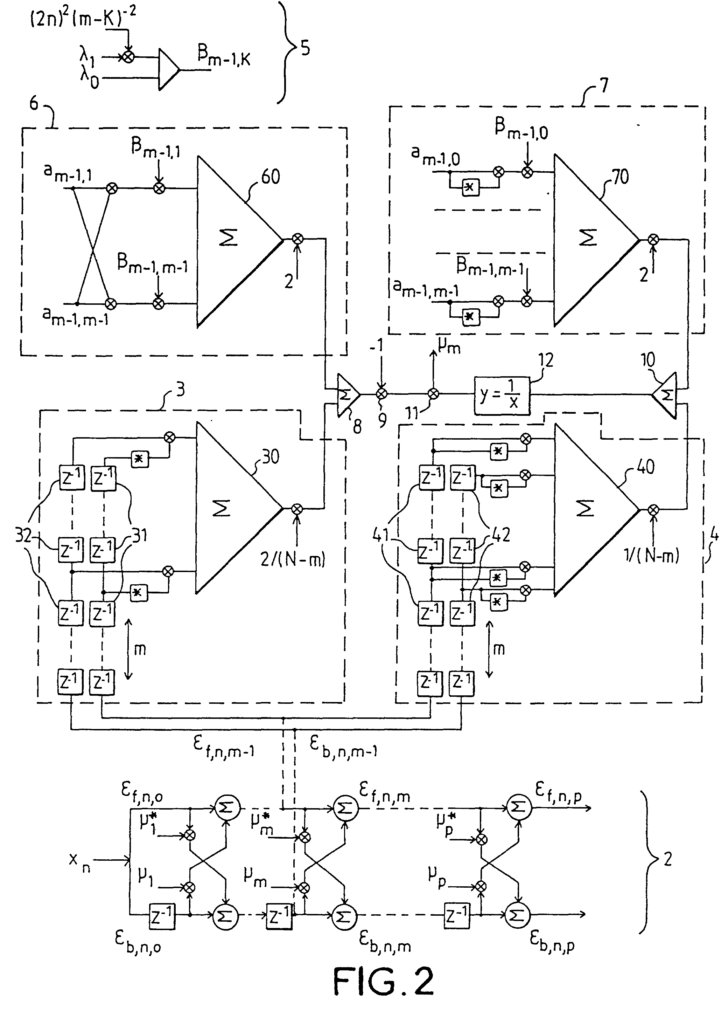

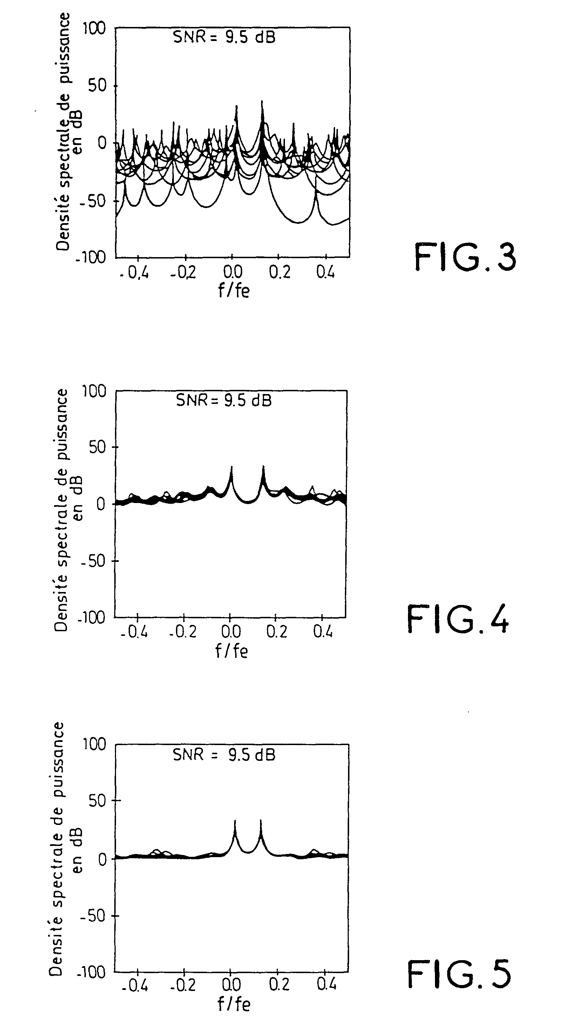

- une figure 1 représente un circuit de calcul par récurrence sur l'ordre p des coefficients $\{a_{p,0},...,a_{p,p}\}$ du modèle de prédiction en fonction des différents coefficients de réflexion $\{\mu_1,...,\mu_p\}$ obtenus par la méthode de Burg;
- une figure 2 représente un circuit de calcul par récurrence des différents coefficients de réflexion $\{\mu_1,...,\mu_p\}$ à partir des différentes erreurs de prédiction directe et rétrograde selon une méthode de Burg régularisée par le procédé selon l'invention ; et
- des figures 3, 4 et 5 montrent les différents spectres de fréquence obtenus par la méthode de Burg respectivement non régularisée, régularisée par le procédé du minimum d'énergie libre et régularisée par le procédé selon l'invention, pour un signal complexe présentant deux raies de fréquence, dont on a tiré, au cours de dix tirages aléatoires, dix échantillons régulièrement répartis.

Comme cela a été rappelé précédemment, l'analyse de spectre d'un signal échantillonné $\{x_n\}$ grâce à un modèle autorégressif par la méthode du maximum d'entropie de Burg consiste à déterminer les coefficients $\{a_{p,1},... a_{p,p}\}$ d'un modèle de prédiction d'ordre p qui correspond à une loi de prédiction du n$^{\text{ième}}$ échantillon $x_n$ à partir des n-p échantillons précédents $\{x_{n-k}\}$, k variant de 1 à p, de la forme :

$$x_n = \varepsilon_{f,n,p} - \sum_{k=1}^{p} a_{p,k} \cdot x_{n-k}$$

où $\varepsilon_{f,n,p}$ est une erreur de prédiction dans le sens direct, par le modèle d'ordre p, de l'échantillon $x_n$, à partir d'une loi de récurrence sur l'ordre p du modèle de la forme :

$$a_{p,k} = a_{p-1,k} + \mu_{p.} a*_{p-1,p-k} \tag{12}$$

$*$ désignant l'opérateur conjugué, avec :

$$\begin{cases} a_{p,0} = 1 \\ a_{p-1,0} = 1 \\ k \in [1,...,p-1] \end{cases}$$

$\mu_p$ étant un coefficient de réflexion déterminé à partir de la relation :

$$\mu_p = -\frac{D*p}{G_p} \tag{13}$$

avec :

$$\begin{cases} D_p = \dfrac{2}{N-p} \sum_{n=p+1}^{N} \varepsilon_{b,n-1,p-1} \cdot \varepsilon^*_{f,n,p-1} \\ G_p = \dfrac{1}{N-p} \sum_{n=p+1}^{N} \left[ \left|\varepsilon_{f,n,p-1}\right|^2 + \left|\varepsilon_{b,n-1,p-1}\right|^2 \right] \end{cases} \tag{14}$$

où $\varepsilon_{f,n,p-1}$ désignant l'erreur de prédiction, dans le sens direct, par le modèle de prédiction d'ordre p-1, sur l'échantillon $x_n$ et $\varepsilon_{b,n-1,p-1}$ l'erreur de prédiction, dans le sens rétrograde, par le modèle d'ordre p-1, sur l'échantillon $x_{n-p}$ :

$$x_{n-p} = \varepsilon_{b,n-1,p-1} - \sum_{k=1}^{p-1} a^*_{p-1,k} \cdot x_{n-p+k}$$

Cette méthode de détermination du coefficient de réflexion $\mu_p$ revient à rechercher un maximum d'entropie, c'est-à-dire la minimisation du terme :

$$E_p = U_p = \frac{1}{2(N-p)} \sum_{n=p+1}^{N} \left[ \left|\varepsilon_{f,n,p}\right|^2 + \left|\varepsilon_{b,n,p}\right|^2 \right] \tag{15}$$

Elle a pour inconvénient d'avoir une fiabilité très sensible au choix de l'ordre p du modèle de prédiction, un ordre trop faible donnant une estimation du spectre de fréquence trop fruste ne reproduisant pas tous les pics existant tandis qu'un ordre trop élevé induit des pics parasites dans l'estimation du spectre de fréquence.

On se propose, pour permettre d'atteindre un ordre maximum sans laisser se développer des pics parasites dans l'estimation du spectre, de rajouter au critère à minimiser la fonction de régularisation employée par Kitagawa et Gersch dans le cadre de l'analyse spectrale par la méthode des moindres carrés.

Le critère à minimiser devient :

$$E_p = U_p + \sum_k \lambda_k . R_{p,k}$$

dans lequel:

$$R_{p,k} = \int_{-1/2}^{1/2} \left| \frac{d^k H_p(f)}{df^k} \right|^2 . df$$

où $H_p(f)$ est la fonction de transfert du filtre prédictif associé au modèle prédictif d'ordre p

$$H_p(f) = \sum_{k=0}^{p} a_{p,k} . e^{-j2\pi kf} \qquad (16)$$

Pour la suite, on se limite à une fonction régularisatrice d'ordre 1, c'est-à-dire que l'on adopte, comme critère à minimiser le terme :

$$E_p = U_p + \lambda_0 R_{p,0} + \lambda_1 R_{p,1}$$

La minimisation consiste à annuler le gradient de ce terme par rapport à $\mu_p$ :

$$\nabla \mu_p E_p = \frac{\delta E_p}{\delta \mu_p} = 0 \qquad (17)$$

ce qui s'écrit encore :

$$\nabla \mu_p E_p = \nabla \mu_p U_p + \lambda_0 \nabla \mu_p R_{p,0} + \lambda_1 \nabla \mu_p R_{p,1} = 0 \qquad (18)$$

Pour expliciter cette relation, on calcule d'abord le terme $\nabla_{\mu p} U_p$. D'après la relation (12) on a :

$$\nabla_{\mu_p} U_p = \frac{1}{2(N-p)} \sum_{n=p+1}^{N} \nabla_{\mu_p} \left| \varepsilon_{f,n,p} \right|^2 + \nabla_{\mu_p} \left| \varepsilon_{b,n,p} \right|^2$$

En tenant compte des relations de récurrence sur les erreurs de prédiction directe et rétrograde qui découlent de la relation de récurrence (12) sur les coefficients du modèle de prédiction :

$$\begin{cases} \varepsilon_{f,n,p} = \varepsilon_{f,n,p-1} + \mu_p \varepsilon_{b,n-1,p-1} \\ \varepsilon_{b,n,p} = \varepsilon_{b,n,p-1} + \mu_p^* \varepsilon_{f,n,p-1} \end{cases}$$

et en utilisant la définition de la dérivation complexe suivante :

$$\nabla_{\mu_p} U_p = \frac{\delta U_p}{\delta \mathrm{Re}[\mu_p]} + j \frac{\delta U_p}{\delta \mathrm{Im}[\mu_p]}$$

on montre que :

$$\begin{cases} \nabla_{\mu_p} |\varepsilon_{f,n,p}|^2 = 2.\varepsilon_{b,n-1,p-1}^* \cdot \varepsilon_{f,n,p} \\ \nabla_{\mu_p} |\varepsilon_{b,n,p}|^2 = 2.\varepsilon_{f,n,p-1} \cdot \varepsilon_{b,n,p}^* \end{cases}$$

On obtient alors :

$$\nabla_{\mu_p} U_p = \mu_p . G_p + D *_p$$

avec :

$$\begin{cases} D_p = \dfrac{2}{N-p} \displaystyle\sum_{n=p+1}^{N} \varepsilon_{b,n-1,p-1} \cdot \varepsilon_{f,n,p-1}^* \\ G_p = \dfrac{1}{N-p} \displaystyle\sum_{n=p+1}^{N} \left[ |\varepsilon_{f,n,p-1}|^2 + |\varepsilon_{b,n-1,p-1}|^2 \right] \end{cases}$$

On passe ensuite au calcul de $\nabla_{\mu_p} R_{p,0}$. Par hypothèse, on a :

$$R_{p,0} = \int_{-1/2}^{1/2} |H_p(f)|^2 . df \qquad (19)$$

de sorte que :

$$\nabla_{\mu_p} R_{p,0} = \int_{-1/2}^{1/2} \nabla_{\mu_p} \left| H_p(f) \right|^2 . df$$

En raison de la relation de récurrence (12) sur les coefficients du modèle de prédiction et de leur relation de définition (16), il existe aussi une relation de récurrence entre les fonctions de transferts des filtres prédictifs correspondants en fonction de l'ordre. Cette relation est la suivante :

$$H_p(f) = H_{p-1}(f) + \mu_p . e^{-j2\pi f p} . H*_{p-1}(f) \tag{20}$$

En tenant compte du fait que :

$$\left| H_p(f) \right|^2 = H_p(f) . H*_p(f)$$

on peut écrire :

$$\left| H_p(f) \right|^2 = \left[ H_{p-1}(f) + \mu_p . e^{-j2\pi f p} . H_{p-1}^*(f) \right] \left[ H_{p-1}^*(f) + \mu_p^* . e^{j2\pi f p} . H_{p-1}(f) \right]$$

ce qui peut se mettre sous la forme :

$$\left| H_p(f) \right|^2 = \left( 1 + \left| \mu_p \right|^2 \right) . \left| H_{p-1}(f) \right|^2 + \left( \mu_p . Y_p^* + \mu_p^* . Y_p \right)$$

avec :

$$Y_p = e^{j2\pi f p} . H_{p-1}^2(f)$$

On en déduit que :

$$\nabla \mu_p \left| H_p(f) \right|^2 = 2 . \mu_p . \left| H_{p-1}(f) \right|^2 + 2 . e^{j2\pi f p} . H_{p-1}^2(f)$$

En remarquant que :

$$\nabla_{\mu_p} H*_p(f) = 2 . e^{j2\pi f p} . H_{p-1}(f)$$

on obtient une première relation :

$$\nabla \mu_p \left| H_p(f) \right|^2 = 2 . \mu_p . \left| H_{p-1}(f) \right|^2 + \nabla \mu_p H*_p(f) . H_{p-1}(f) \tag{21}$$

Cette relation permet de remonter à l'expression du gradient de $R_{p,0}$. En effet, on a par définition en raison de la relation (16) :

$$H_{p-1}(f) = \sum_{k=0}^{p-1} a_{p-1,k}.e^{-j2\pi kf}$$

En tenant compte de la relation (19) de définition du gradient de $R_{p,0}$, on obtient par intégration de la relation (21):

$$\nabla_{\mu_p} R_{p,0} = 2.\mu_p.\int_{-1/2}^{1/2}\left|H_{p-1}(f)\right|^2.df + 2.\sum_{k=0}^{p-1}\sum_{l=0}^{p-1} a_{p-1,k}.a_{p-1,l}.\int_{-1/2}^{1/2}e^{-j2\pi(k+l-p)f}.df$$

Or :

$$\int_{-1/2}^{1/2}e^{-j2\pi(k+l-p)f}.df = \delta_{k+l-p} \quad \text{(symbole de Kronecker)}$$

et :

$$\int_{-1/2}^{1/2}\left|H_{p-1}(f)\right|^2.df = R_{p-1,0}$$

de sorte que l'on déduit de l'équation précédente la relation :

$$\nabla_{\mu_p} R_{p,0} = 2.\mu_p.R_{p-1,0} + 2.\sum_{k=1}^{p-1} a_{p-1,k}.a_{p-1,p-k} \qquad (22)$$

Le terme $R_{p-1,0}$ peut être développé comme suit

$$R_{p-1,0} = \int_{-1/2}^{1/2}\left|H_{p-1}(f)\right|^2.df = \int_{-1/2}^{1/2}H_{p-1}(f).H_{p-1}^*(f).df$$

ou encore :

$$R_{p-1,0} = \sum_{k=0}^{p-1}\sum_{l=0}^{p-1} a_{p-1,k}.a_{p-1,l}^*.\int_{-1/2}^{1/2}e^{-j2\pi(k-l)f}.df$$

Or :

$$\int_{-1/2}^{1/2} e^{-j2\pi(k-l)f} \, df = \delta_{k,l} \quad \text{(symbole de Kronecker)}$$

d'où:

$$R_{p-1,0} = \sum_{k=0}^{p-1} \left| a_{p-1,k} \right|^2 \qquad (23)$$

En utilisant cette dernière expression dans la relation (22) on obtient :

$$\nabla_{\mu_p} R_{p,0} = 2.\mu_p. \sum_{k=0}^{p-1} \left| a_{p-1,k} \right|^2 + 2. \sum_{k=1}^{p-1} a_{p-1,k}.a_{p-1,p-k} \qquad (24)$$

Pour continuer le développement de la relation (18), il reste à calculer le terme suivant :

$$\nabla_{\mu_p} R_{p,1} = \int_{-1/2}^{1/2} \nabla_{\mu_p} \left| \frac{dH_p(f)}{df} \right|^2 \, df \qquad (25)$$

En raison de la relation de récurrence (20) sur la fonction de transfert du filtre prédictif associé au modèle :

$$H_p(f) = H_{p-1}(f) + \mu_p.e^{-j2\pi fp}.H*_{p-1}(f)$$

que l'on peut noter :

$$H_p(f) = H_{p-1}(f) + \mu_p.T_p(f)$$

avec :

$$T_p(f) = e^{-j2\pi fp}.H*_{p-1}(f) \qquad (26)$$

on peut écrire que :

$$\left| \frac{dH_p(f)}{df} \right|^2 = \frac{dH_p(f)}{df}.\left( \frac{dH_p(f)}{df} \right)^*$$

vaut également :

$$\left|\frac{dH_p(f)}{df}\right|^2 = \left(\frac{dH_{p-1}(f)}{df} + \mu_p.\frac{dT_p(f)}{df}\right).\left(\left(\frac{dH_{p-1}(f)}{df}\right)^* + \mu_p^*.\left(\frac{dT_p(f)}{df}\right)^*\right)$$

Cela s'écrit encore :

$$\left|\frac{dH_p(f)}{df}\right|^2 = \left|\frac{dH_{p-1}(f)}{df}\right|^2 + |\mu_p|^2.\left|\frac{dT_p(f)}{df}\right|^2 + \mu_p.\left(M_p(f)\right)^* + \mu_p^*.M_p(f)$$

en posant:

$$M_p(f) = \left(\frac{dT_p(f)}{df}\right)^* . \frac{dH_{p-1}(f)}{df} \qquad (27)$$

En passant au gradient, on obtient :

$$\nabla_{\mu_p}\left|\frac{dH_p(f)}{df}\right|^2 = 2.\mu_p.\left|\frac{dT_p(f)}{df}\right|^2 + 2.M_p(f) \qquad (28)$$

Pour évaluer $M_p(f)$, on remarque que d'après les relations de définition (27) et (26) on a :

$$M_p(f) = e^{j2\pi fp}.\left(\frac{dH_{p-1}(f)}{df}\right)^2 + j2\pi p.e^{j2\pi fp}.\frac{dH_{p-1}(f)}{df}.H_{p-1}(f)$$

Pour évaluer :

$$\left|\frac{dT_p(f)}{df}\right|^2$$

on remarque que :

$$\left(\frac{dH_{p-1}^*(f)}{df}\right)^* = \frac{dH_{p-1}(f)}{df}$$

car:

$$H_{p-1}(f) = \sum_{k=0}^{p-1} a_{p-1,k}.e^{-j2\pi fp}$$

de sorte que l'on peut écrire :

$$\left|\frac{dT_p(f)}{df}\right|^2 = (2\pi)^2.p^2.\left|H_{p-1}(f)\right|^2 + \left|\frac{dH_{p-1}(f)}{df}\right|^2 + Z_p(f) + Z_p^*(f)$$

avec :

$$Z_p(f) = -j2\pi p.H*_{p-1}(f).\frac{dH_{p-1}(f)}{df}$$

Pour calculer l'expression (25), il faut intégrer chacun des termes de la relation (28). Il vient pour le premier terme :

$$\int_{-1/2}^{1/2} M_p(f) = -(2\pi)^2.\sum_{k=0}^{p-1}\sum_{l=0}^{p-1} k.l.a_{p-1,k}.a_{p-1,l}.\int_{-1/2}^{1/2} e^{-j2\pi(k+l-p)f}.df$$
$$+(2\pi)^2.p.\sum_{k=0}^{p-1}\sum_{l=0}^{p-1} l.a_{p-1,k}.a_{p-1,l}.\int_{-1/2}^{1/2} e^{-j2\pi(k+l-p)f}.df$$

ce qui est égal à :

$$\int_{-1/2}^{1/2} M_p(f).df = (2\pi)^2.\sum_{k=1}^{p-1} (k-p)^2.a_{p-1,k}.a_{p-1,p-k}$$

L'intégration de l'autre terme de la relation (28) donne :

$$\int_{-1/2}^{1/2}\left|\frac{dT_p(f)}{df}\right|^2.df = R_{p-1,1} + (2\pi)^2.p^2.R_{p-1,0} + 2\,\mathrm{Re}\left[-(2\pi)^2.p.\sum_{k=0}^{p-1}\sum_{l=0}^{p-1} k.a_{p-1,k}.a_{p-1,l}^*.\delta_{k,l}\right]$$

ce qui s'écrit encore :

$$\int_{-1/2}^{1/2} \left| \frac{dT_p(f)}{df} \right|^2 . df = R_{p-1,1} + (2\pi)^2 . p^2 . R_{p-1,0} - 2.(2\pi)^2 . \sum_{k=0}^{p-1} k.p.\left|a_{p-1,k}\right|^2$$

On en déduit l'expression synthétique du gradient:

$$\nabla_{\mu_p} R_{p,1} = 2\mu_p \left[ R_{p-1,1} + (2\pi)^2 . p^2 R_{p-1,0} - 2.(2\pi)^2 . \sum_{k=0}^{p-1} k.p.\left|a_{p-1,k}\right|^2 \right] + 2.(2\pi)^2 . \sum_{k=1}^{p-1} (k-p)^2 . a_{p-1,k} . a_{p-1,p-k}$$

Il reste à exprimer les termes $R_{p-1,0}$ et $R_{p-1,1}$. On a vu, avec la relation (23) que:

$$R_{p-1,0} = \sum_{k=0}^{p-1} \left|a_{p-1,k}\right|^2$$

Pour le terme $R_{p-1,1}$ on repart de sa définition :

$$R_{p-1,1} = \int_{-1/2}^{1/2} \left| \frac{dH_{p-1}(f)}{df} \right|^2 . df$$

Il vient alors en explicitant $H_{p-1}(f)$ :

$$R_{p-1,1} = (2\pi)^2 . \sum_{k=0}^{p-1} \sum_{l=0}^{p-1} k.l.a_{p-1,k} . a_{p-1,l}^* \int_{-1/2}^{1/2} e^{-j2\pi(k-l)f} . df$$

ou encore :

$$R_{p-1,1} = (2\pi)^2 . \sum_{k=0}^{p-1} k^2 . \left|a_{p-1,k}\right|^2$$

Le gradient de $R_{p,1}$ se met alors sous la forme :

$$\nabla_{\mu_p} R_{p,1} = 2.\mu_p . \left[ (2\pi)^2 . \sum_{k=0}^{p-1} (k-p)^2 . \left|a_{p-1,k}\right|^2 \right] + 2.(2\pi)^2 . \sum_{k=1}^{p-1} (k-p)^2 . a_{p-1,k} . a_{p-1,p-k}$$

D'où l'expression finale du gradient d'énergie à minimiser en fonction des coefficients du modèle de prédiction d'ordre p-1 et du coefficient de réflexion d'ordre p:

$$\nabla_{\mu_p} E_p = \mu_p . G_p + D_p^*$$
$$+ \lambda_0 . \left[ 2 . \mu_p . \sum_{k=0}^{p-1} \left| a_{p-1,k} \right|^2 + 2 . \sum_{k=1}^{p-1} a_{p-1,k} . a_{p-1,p-k} \right]$$
$$+ \lambda_1 . \left[ 2 . \mu_p . \left( (2\pi)^2 . \sum_{k=0}^{p-1} (k-p)^2 . \left| a_{p-1,k} \right|^2 \right) + 2 . (2\pi)^2 . \sum_{k=1}^{p-1} (k-p)^2 . a_{p-1,k} . a_{p-1,p-k} \right]$$

En revenant à la relation (17) qui exprime que l'on cherche un coefficient de réflexion $\mu_p$ tel que :

$$\nabla \mu_p E_p = 0$$

on en déduit une nouvelle expression du coefficient de réflexion de l'analyse spectrale de Burg régularisée :

$$\mu_p = - \frac{\dfrac{2}{N-p} \displaystyle\sum_{n=p+1}^{N} \varepsilon_{f,n,p-1} . \varepsilon_{b,n-1,p-1}^* + 2 . \displaystyle\sum_{k=1}^{p-1} \left[ \lambda_0 + \lambda_1 . (2\pi)^2 . (k-p)^2 \right] . a_{p-1,k} . a_{p-1,p-k}}{\dfrac{1}{N-p} \displaystyle\sum_{k=p+1}^{N} \left[ \left| \varepsilon_{f,n,p-1} \right|^2 + \left| \varepsilon_{b,n-1,p-1} \right|^2 \right] + 2 \displaystyle\sum_{k=0}^{p-1} \left[ \lambda_0 + \lambda_1 . (2\pi)^2 . (k-p)^2 \right] . \left| a_{p-1,k} \right|^2}$$

$$(29)$$

qui peut s'écrire également dans une écriture abrégée :

$$\mu_p = - \frac{D_p^* + 2 \displaystyle\sum_{k=1}^{p-1} \left[ \lambda_0 + \lambda_1 . (2\pi)^2 . (k-p)^2 \right] . a_{p-1,k} . a_{p-1,p-k}}{G_p + 2 \displaystyle\sum_{k=0}^{p-1} \left[ \lambda_0 + \lambda_1 . (2\pi)^2 . (k-p)^2 \right] . \left| a_{p-1,k} \right|^2}$$

avec les définitions des relations (14) précédentes :

$$\begin{cases} D_p = \dfrac{2}{N-p} \displaystyle\sum_{n=p+1}^{N} \varepsilon_{b,n-1,p-1} . \varepsilon_{f,n,p-1}^* \\[4mm] G_p = \dfrac{1}{N-p} \displaystyle\sum_{n=p+1}^{N} \left[ \left| \varepsilon_{f,n,p-1} \right|^2 + \left| \varepsilon_{b,n-1,p-1} \right|^2 \right] \end{cases}$$

On remarque que la régularisation consiste à modifier la définition sous forme de fraction du coefficient de réflexion :

$$\mu_p = -\frac{D*_p}{G_p}$$

de la méthode d'analyse spectrale de Burg en ajoutant au numérateur l'expression :

$$2\sum_{k=1}^{p-1}\left[\lambda_0 + \lambda_1.(2\pi)^2.(k-p)^2\right].a_{p-1,k}.a_{p-1,p-k}$$

et au dénominateur l'expression :

$$2\sum_{k=0}^{p-1}\left[\lambda_0 + \lambda_1.(2\pi)^2.(k-p)^2\right].\left|a_{p-1,k}\right|^2$$

Comme la version multisegment de la méthode de Burg ne revient qu'à remplacer les termes $D_p$ et $G_p$ de l'expression fractionnelle du coefficient de réflexion par des termes $D_{l,p}$ et $G_{l,p}$ :

$$\mu_{l,p} = -\frac{D^*_{l,p}}{G_{l,p}}$$

avec :

$$\begin{cases} D_{I,p} = \dfrac{2}{(N-p)I}\sum_{i=1}^{I}\sum_{n=p+1}^{N}\varepsilon_{b,i,n-1,p-1}.\varepsilon^*_{f,i,n,p-1} \\[2ex] G_{I,p} = \dfrac{1}{(N-p)I}\sum_{i=1}^{I}\sum_{n=p+1}^{N}\left[\left|\varepsilon_{f,i,n,p-1}\right|^2 + \left|\varepsilon^*_{b,i,n-1,p-1}\right|^2\right] \end{cases}$$

on en déduit que la même régularisation appliquée à la version multisegment de la méthode de Burg conduit à adopter un coefficient de réflexion de la forme :

$$\mu_{I,p} = -\frac{D^*_{I,p} + 2\sum_{k=1}^{p-1}\left[\lambda_0 + \lambda_1.(2\pi)^2.(k-p)^2\right].a_{p-1,k}.a_{p-1,p-k}}{G_{I,p} + 2\sum_{k=0}^{p-1}\left[\lambda_0 + \lambda_1.(2\pi)^2.(k-p)^2\right].\left|a_{p-1,k}\right|^2}$$

Il est possible de rendre la version multisegment de l'algorithme de Burg dans le cas du filtrage, plus robuste vis-à-vis de la présence éventuelle d'une ou plusieurs cibles dans la fenêtre d'estimation. En effet, l'estimation du filtre autorégressif moyen donné par l'algorithme de Burg multisegment est "désensibilisée", si une cible de forte intensité ou plusieurs d'intensités moindres occupent un nombre relatif non négligeable de cellules de la fenêtre d'estimation.

Le filtre moyen étant désadapté vis-à-vis de l'environnement de fouillis, la détection de la cible, en sortie de filtrage, est dégradée, voire absente.

Pour pallier à cet inconvénient, il est possible de développer une technique de pondération statistique des données en provenance des cellules, en fonction d'une probabilité d'appartenance a posteriori de ces cellules à la population majoritaire, dont le modèle autorégressif moyen est déterminé par l'algorithme de Burg multisegment. Cette technique conduit à la modification suivante de l'expression du coefficient de réflexion multisegment régularisé :

$$\mu_{I,p} = -\frac{D_{I,p}^{'*} + 2.\sum_{k=1}^{p-1}\left[\lambda_0 + \lambda_1.(2\pi)^2.(k-p)^2\right].a_{p-1,k}.a_{p-1,p-k}}{G_{I,p}' + 2.\sum_{k=0}^{p-1}\left[\lambda_0 + \lambda_1.(2\pi)^2.(k-p)^2\right].\left|a_{p-1,k}\right|^2} \qquad (30)$$

avec

$$\begin{cases} D_{I,p}' = 2.\sum_{i=1}^{I}K\left(\chi_{i,p-1}^2\right).\sum_{n=p+1}^{N}\varepsilon_{b,i,n-1,p-1}.\varepsilon_{f,n,p-1}^* \\ G_{I,p}' = \sum_{i=1}^{I}K\left(\chi_{i,p-1}^2\right).\sum_{n=p+1}^{N}\left[\left|\varepsilon_{f,i,n,p-1}\right|^2 + \left|\varepsilon_{b,i,n-1,p-1}\right|^2\right] \end{cases}$$

Dans l'expression précédente, la pondération

$$K\left(\chi_{i,p-1}^2\right)$$

s'exprime comme suit :

$$K\left(\chi_{i,p-1}^2\right) = \frac{P\left(\chi_{i,p-1}^2 / s_{j=1}\right).P(s_i = 1)}{P\left(\chi_{i,p-1}^2 / s_{j=1}\right).P(s_i = 1) + P\left(\chi_{i,p-1}^2 / s_{i=0}\right).P(s_{i=0})}$$

$s_j$ étant égal à 1 si la cellule i de la fenêtre d'estimation contient uniquement du fouillis et à 0 si la cellule i de la fenêtre d'estimation contient une cible.

De plus, on a quelque soit i:

$$P(s_i = 1) = p_1 \text{ et } P(s_i = 0) = p_0$$

avec

$$(p_0 + p_1) = 1$$

$p_1$ étant la probalité a priori qu'une cellule de la fenêtre d'estimation ne contienne que du fouillis et $p_0$ la probabilité a priori qu'une cellule de la fenêtre d'estimation contienne une cible.

La variable $\chi^2_{i,p-1}$ dépend des variables de l'algorithme à l'ordre p-1, soit des données brutes si p=1, soit des erreurs de prédiction directe et rétrograde. Cette variable suit une loi de $\chi^2$.

L'expression du coefficient de réflexion multisegment pondéré statistiquement régularisé (30) est obtenu en minimisant l'énergie d'erreur régularisée suivante :

$$E_p = U_p^{stat} + \sum_k \lambda_k . R_{p,k}$$

où:

$$U_p^{stat} = E\left(P_p / \chi^2_{p-1}\right) = \sum_{j=1}^{I} \left(\chi^2_{j,p-1}\right).P_{j,p}$$

avec

$$P_{j,p} = \sum_{n=p+1}^{N} \left[\left|\varepsilon_{f,j,n,p}\right|^2 + \left|\varepsilon_{b,j,n,p}\right|^2\right]$$

et où, comme on l'a vu précédemment

$$R_{p,k} = \int_{-1/2}^{1/2} \left|\frac{d^k H_p(f)}{df^k}\right|^2 .df$$

la minimisation consistant à annuler le gradient de ce terme d'énergie d'erreur régularisée par rapport à $\mu_{l,p}$.

$$\frac{\partial E_p}{\partial \mu_{l,p}} = 0 \Rightarrow \mu_{l,p} \text{ optimal}$$

L'expression de $U_p^{stat}$ représente l'espérance statistique de la puissance totale (et non plus moyenne) des erreurs de prédiction directe et rétrograde de la population majoritaire de la fenêtre d'estimation, conditionnellement à la connaissance a priori de la variable

$$\chi^2_{p-1} = \left(\chi^2_{1,p-1},...,\chi^2_{I,p-1}\right)$$

à l'ordre p-1 :

$$U_p^{stat} = E\left(P_p \,/\, \chi_{p-1}^2\right).$$

Cette expression se développe en appliquant la formule des probabilités totales :

$$E\left(P_p \,/\, \chi_{p-1}^2\right) = \sum^{2^I} P\left(C_i \,/\, \chi_{p-1}^2\right).E\left(P_p \,/\, C_i \bigcap \chi_{p-1}^2\right)$$

$$C_i \in C \text{ avec } C = \left\{ C_i \,/\, C_i = \left\{ s_{i,k} = o_{i,k} \right\}_{k=1,\dots,I} \text{ avec } o_{i,k} = \{0,1\} \right\}$$

$$\begin{cases} s_{i,k} = 1 \text{ si la cellule contient uniquement du fouillis} \\ s_{i,k} = 0 \text{ si la cellule contient une cible et du fouillis .} \end{cases}$$

On remarque que $s_{i,k}$ correspond à la cellule k de la fenêtre d'estimation pour l'évènement $C_i$ et l'on montre que l'on peut se ramener à l'expression suivante :

$$E\left(P_p \,/\, \chi_{p-1}^2\right) = \sum_{j=1}^{I} P\left(s_j = 1 \,/\, \chi_{j,p-1}^2\right).P_{j,p}$$

La relation de Bayes donne :

$$P\left(s_j = 1 \,/\, \chi_{j,p-1}^2\right) = K\left(\chi_{j,p-1}^2\right)$$

La formule du nouveau coefficient de réflexion multisegment, donnée par la relation (30), peut être explicité, en développant les considérations suivantes sur les variables aléatoires conditionnée par des événements :

Considérons une partition d'évènement $C_i$ d'un espace probabilisé E et une variable aléatoire réelle X. La formule des probabilités totales appliquée à l'événement $\{X < x\}$ donne :

$$F_X(x) = P(X < x) = \sum_{i=1}^{n} P(C_i).P(X < x \,/\, C_i)$$

$$f_X(x) = \sum_{i=1}^{n} P(C_i).f_{X/C_i}(x) \quad \text{avec} \quad f_{X/C_i}(x) = \frac{dP(X < x \,/\, C_i)}{dx}$$

$$E(X) = \int_{-\infty}^{\infty} x.f_X(x).dx = \sum_{i=1}^{n} P(C_i) \int_{-\infty}^{\infty} x.f_{X/C_i}(x)dx$$

$$E(X) = \sum_{i=1}^{n} P(C_i).E(X/C_i) \qquad (32)$$

Cette dernière relation permet de calculer la puissance moyenne d'erreur d'estimation et d'en déduire une expression du coefficient de réflexion multisegment possédant une pondération statistique des données en provenance de chaque cellule en fonction de la probabilité de cette cellule d'appartenir à l'environnement fouillis.

Pour ce faire, on prendra comme notation :

$$C_i \in C \quad \text{avec} \quad C = \left\{ C_i / C_i = \left\{ s_{i,k} = o_{i,k} \right\}_{k=1,...,I} \text{ avec } o_{i,k} = \{0,1\} \right\}$$

$$\begin{cases} s_{i,k} = 1 \text{ si la cellule contient uniquement du fouillis} \\ s_{i,k} = 0 \text{ si la cellule contient une cible et du fouillis} \end{cases}$$

On peut remarquer que Card[C]=$2^I$ et que $s_{i,k}$ correspond à la cellule k de la fenêtre d'estimation pour l'événement $C_i$.

Pour la suite, on posera :

$$X = P_p$$

Pp étant la puissance totale d'erreur de prédiction directe et rétrograde pour les cellules de la population majoritaire dans la fenêtre d'estimation

$$\chi_{p-1}^2 = \left( \chi_{1,p-1}^2, ..., \chi_{I,p-1}^2 \right)$$

avec

$$\chi_{i,p-1}^2 = \frac{\sum_{n=p+1}^{N} \left[ \left| \varepsilon_{f,i,n,p-1} \right|^2 + \left| \varepsilon_{b,i,n-1,p-1} \right|^2 \right]}{P_{I,p-1}}$$

En appliquant la formule (32) à $P_p$ sous la condition de connaissance de $\chi_{p-1}^2$, on obtient :

$$E\left(P_p / \chi_{p-1}^2\right) = \sum_{i=1}^{2^I} P\left(C_i / \chi_{p-1}^2\right).E\left(P_p / C_i \bigcap \chi_{p-1}^2\right) \qquad (33)$$

car

$$P(X / Z) = P\left[X \bigcap \left(\bigcup_{i=1}^{2^I} C_i\right) / Z\right]$$

$$= P\left[\bigcup_{i=1}^{2^I} (X \bigcap C_i) / Z\right]$$

$$= \sum_{i=1}^{2^I} P(X \bigcap C_i / Z) - P\left[\bigcap_{i=1}^{2^I} (X \bigcap C_i) / Z\right]$$

avec

$$\bigcap_{i=1}^{2^I} C_i = 0$$

$$\bigcup_{i=1}^{2^I} C_i = E$$

$$P\left[\bigcap_{i=1}^{2^I} (X \bigcap C_i) / Z\right] = P\left[X \bigcap \left(\bigcap_{i=1}^{2^I} C_i\right) / Z\right] = 0$$

En tenant compte du fait que:

$$P(X \bigcap C_i / Z) = P(C_i / Z).P(X / C_i \bigcap Z).$$

et en remplaçant X par $P_p$ et Z par $\chi_{p-1}^2$ on se ramène comme pour (32) à l'expression (33).
Pour la suite du développement, on applique la formule de Bayes à

$$P\left(C_i / \chi_{p-1}^2\right):$$

$$P\left(C_i \,/\, \chi^2_{p-1}\right) = \frac{P\left(\chi^2_{p-1} \,/\, C_i\right) . P(C_i)}{P\left(\chi^2_{p-1}\right)} = \frac{P\left(\chi^2_{p-1} \,/\, C_i\right) . P(C_i)}{\sum\limits_{j=1}^{2^I} P\left(\chi^2_{p-1} \,/\, C_j\right) . P(C_j)}$$

$$\forall j, P(C_j) = \frac{1}{2^I}$$

de sorte que

$$P\left(C_i \,/\, \chi^2_{p-1}\right) = \frac{P\left(\chi^2_{p-1} \,/\, C_i\right)}{\sum\limits_{j=1}^{2^I} P\left(\chi^2_{p-1} \,/\, C_j\right)}$$

Pour simplifier l'écriture dans la suite, on posera :

$$Q = \sum_{j=1}^{2^I} P\left(\chi^2_{p-1} \,/\, C_j\right)$$

On peut exprimer de façon synthétique

$$E\left(P_p \,/\, C_i \cap \chi^2_{p-1}\right):$$

$$E\left(P_p \,/\, C_i \cap \chi^2_{p-1}\right) = E\left(P_p \,/\, C_i \cap \chi^2_{p-1}\right) = \sum_{j=1}^{I} \delta_{C_i(j)} . P_{j,p}$$

avec

$$\delta_{C_i(j)} = \begin{cases} 1 \ si \ s_{i,j} = 1 \ avec \ C_i = \{S_{i,k}\}_{k=1,\cdots,I} \\ 0 \quad sinon \end{cases}$$

Soit en se ramenant à l'expression (33) :

$$E\left(P_p \mid \chi^2_{p-1}\right) = \sum_{i=1}^{2^I}\left[\frac{P\left(\chi^2_{p-1} \mid C_i\right)}{Q} \cdot \sum_{j=1}^{I} \delta_{C_i(j)}.P_{j,p}\right]$$

$$= \frac{1}{Q} \cdot \sum_{j=1}^{I}\left[\sum_{i=1}^{2^I}\left(P\left(\chi^2_{p-1} \mid C_i\right).\delta_{C_i(j)}\right)\right].P_{j,p} \tag{34}$$

or

$$\sum_{i=1}^{2^I}\left(P\left(\chi^2_{p-1} \mid C_i\right).\delta_{C_i(j)}\right) = \frac{P\left(\chi^2_{p-1}\right)}{2^{-I}} \cdot \sum_{i=1}^{2^I} P\left(C_i \mid \chi^2_{p-1}\right).\delta_{C_i(j)}$$

car

$$P\left(\chi^2_{p-1} \mid C_i\right) = \frac{P\left(\chi^2_{p-1}\right).P\left(C_i \mid \chi^2_{p-1}\right)}{P(C_i)} \; et \; P(C_i) = 2^{-I}$$

or comme

$$P\left(G\bigcup H \mid K\right) = P(G \mid K) + P(H \mid K) - P\left(G\bigcap H \mid K\right)$$

et

$$P\left(\bigcap_{i=1}^{2^I} C_i \mid \chi^2_{p-1}\right) = 0 \; car \; \bigcap_{i=1}^{2^I} C_i = 0$$

alors

$$\sum_{i=1}^{2^I} P\left(C_i \,/\, \chi_{p-1}^2\right).\,\delta_{C_i(j)} = P\left(\bigcup_{i=1}^{2^I}\left[C_i.\delta_{C_i}(j)\right]\,/\,\chi_{p-1}^2\right)$$

soit

$$\sum_{i=1}^{2^I} P\left(\chi_{p-1}^2 \,/\, C_i\right).\,\delta_{C_i(j)} = \frac{P\left(\chi_{p-1}^2\right)}{2^{-I}} \cdot P\left(\bigcup_{i=1}^{2^I}\left[C_i.\delta_{C_i(j)}\right]\,/\,\chi_{p-1}^2\right)$$

$$P\left(\bigcup_{i=1}^{2^I}\left[C_I \delta_{C_i}(j)\right]\right) = \sum_{i=1}^{2^I} P(C_i).\,\delta_{C_i(j)} = 2^{-I}.2^{I-1} = 2^{-1}$$

car

$$P(C_i) = 2^{-I} \text{ et } \sum_{i=1}^{2^I} \delta_{C_i}(j) = 2^{I-1} \,\forall j$$

ce qui permet d'écrire :

$$\sum_{i=1}^{2^I}\left( P\left(\chi_{p-1}^2 \,/\, C_i\right).\,\delta_{C_i(j)} \right) = \frac{P\left(\chi_{p-1}^2\right).P\left(\bigcup_{i=1}^{2^I}\left[C_i.\delta_{C_i(j)}\right]\,/\,\chi_{p-1}^2\right)}{2^{-(I-1)}.P\left(\bigcup_{i=1}^{2^I}\left[C_i.\delta_{C_i(j)}\right]\right)}$$

$$= 2^{I-1}.P\left(\chi_{p-1}^2 \,/\, \bigcup_{i=1}^{2^I}\left[C_i.\delta_{C_i(j)}\right]\right)$$

Dans la suite, on préférera écrire :

$$\sum_{i=1}^{2^I}\left(P\left(\chi^2_{p-1}/C_i\right).\delta_{C_i(j)}\right)=\frac{P\left(\chi^2_{p-1}\right).P\left(\bigcup_{i=1}^{2^I}\left[C_i.\delta_{C_i(j)}\right]/\chi^2_{p-1}\right)}{2^{-I}}$$

A partir de l'expression (34), on se ramène à la nouvelle expression :

$$E\left(P_p/\chi^2_{p-1}\right)=\frac{2^I.P\left(\chi^2_{p-1}\right)}{Q}.\sum_{j=1}^{I}\left[P\left(\bigcup_{i=1}^{2^I}\left[C_i.\delta_{C_i(j)}\right]/\chi^2_{p-1}\right).P_{j,p}\right] \quad (35)$$

or

$$P\left(\bigcup_{i=1}^{2^I}\left[C_i.\delta_{C_i(j)}\right]/\chi^2_{p-1}\right)=P\left(s_j=1/\chi^2_{1,p-1,\dots,}\chi^2_{I,p-1}\right)=P\left(s_j=1/\chi^2_{j,p-1}\right)$$

On note ici, $s_j$ la cellule j de la fenêtre d'estimation.
On a vu précédemment que :

$$P\left(\chi^2_{p-1}\right)=\sum_{j=1}^{2^I}P\left(\chi^2_{p-1}/C_j\right).P\left(C_j\right)=2^{-I}.Q$$

Il en découle une nouvelle écriture pour l'expression (35) :

$$E\left(P_p/\chi^2_{p-1}\right)=\sum_{j=1}^{I}P\left(s_j=1/\chi^2_{j,p-1}\right).P_{j,p} \quad (36)$$

avec

$$P\left(s_j=1/\chi^2_{j,p-1}\right)=\frac{P\left(\chi^2_{j,p-1}/s_j=1\right).P\left(s_j=1\right)}{P\left(\chi^2_{j,p-1}\right)}$$

$$=\frac{P\left(\chi^2_{j,p-1}/s_j=1\right).P\left(s_j=1\right)}{P\left(\chi^2_{j,p-1}/s_j=1\right).P\left(s_j=1\right)+P\left(\chi^2_{j,p-1}/s_j=0\right).P\left(s_j=0\right)}$$

Par dérivation de (36) par rapport à $\mu_{I,p}$, on trouve l'expression du coefficient de réflexion :

$$\frac{\partial E\left(P_p \,/\, \chi^2_{p-1}\right)}{\partial \mu_{I,p}} = 0 \Rightarrow \mu_{I,p} = -\frac{D'^{*}_{I,p}}{G'_{I,p}} \quad (37)$$

avec

$$\begin{cases} D'_{I,p} = 2.\sum_{i=1}^{I} K\left(\chi^2_{i,p-1}\right). \sum_{n=p+1}^{N} \varepsilon_{b,i,n-1,p-1}.\varepsilon^{*}_{f,n,p-1} \\[2ex] G'_{I,p} = \sum_{i=1}^{I} K\left(\chi^2_{i,p-1}\right). \sum_{n=p+1}^{N} \left[ \left|\varepsilon_{f,i,n,p-1}\right|^2 + \left|\varepsilon_{b,i,n-1,p-1}\right|^2 \right] \end{cases}$$

Dans l'expression précédente,

$$K\left(\chi^2_{i,p-1}\right)$$

est donnée par:

$$K\left(\chi^2_{i,p-1}\right) = \frac{P\left(\chi^2_{i,p-1} \,/\, s_i = 1\right).P\left(s_i = 1\right)}{P\left(\chi^2_{i,p-1} \,/\, s_i = 1\right).P\left(s_i = 1\right) + P\left(\chi^2_{i,p-1} \,/\, s_i = 0\right).P\left(s_i = 0\right)}$$

$P(s_i = 1) = p_1$ et $P(s_i = 0) = p_0$ sont les probabilités a priori telles que $p_0 + p_1 = 1$.

Pour le cas p=0, on a :

$$\begin{cases} P\left(\chi^2_{i,0} \,/\, s_i = 1\right) = \rho\left(\chi^2_{i,0,\rho} \,/\, s_i = 1\right).\Phi\rho\left(\chi^2_{i,0,\rho} \,/\, s_i = 1\right) \\[2ex] P\left(\chi^2_{i,0} \,/\, s_i = 0\right) = \rho\left(\chi^2_{i,0,\rho} \,/\, s_i = 0\right).\Phi\rho\left(\chi^2_{i,0,\rho} \,/\, s_i = 0\right) \end{cases}$$

avec

$$\begin{cases} \rho\left(\chi^2_{i,0,\rho} /.\right) : \text{loi de répartition en amplitude} \\[2ex] \Phi\rho\left(\chi^2_{i,0,\rho} /.\right) : \text{loi de répartition en phase} \end{cases}$$

Pour le cas ($s_i = 1$) et ($p=0$), c'est-à-dire le cas du fouillis dans la cellule, par exemple du fouillis de chaffe on a une loi log-normale pour l'amplitude :

$$\rho\left(\chi^2_{i,0,\rho} / s_i = 1\right) = \frac{1}{2^{\nu/2}.\Gamma(\nu/2)}.e^{-\frac{\chi^2_{i,0,\rho}}{2}}.\left(\chi^2_{i,0,\rho}\right)^{\nu/2-1}$$

avec

$\nu = N - 2$ : loi du $\chi^2$ ayant $\nu$ degrés de liberté

$$\chi^2_{i,0,\rho} = \sum_{n=1}^{N}\left(\frac{\log\left[\left|x_{n,i}\right|^2\right] - m_\rho}{\sigma_\rho}\right)^2$$

$$\begin{cases}\Gamma : \text{fonction d'Euler } \Gamma(z) = \int\limits_{0}^{\infty} e^{-t}.t^{z-1}.dt \\[2mm] \Gamma(m+1/2) = \dfrac{(2m)!}{2^{2m}.m!}.\sqrt{\pi} \text{ pour m entier}\end{cases}$$

pour $m_\rho$ et $\sigma_\rho$ définis par :

$$m_\rho = \frac{1}{N.I}.\sum_{i=1}^{I}\sum_{n=1}^{N}\log\left[\left|x_{n,i}\right|^2\right]$$

$$\sigma_\rho = \frac{1}{I.(N-1)}.\sum_{i=1}^{I}\sum_{n=1}^{N}\left(\log\left[\left|x_{n,i}\right|^2\right] - m_\rho\right)^2$$

et une loi gaussienne en phase

$$\Phi\left(\chi^2_{i,0,\Phi} / s_i = 1\right) = \frac{1}{2^{\nu/2}.\Gamma(\nu/2)}.e^{-\frac{\chi^2_{i,0,\Phi}}{2}}.\left(\chi^2_{i,0,\Phi}\right)^{\nu/2-1}$$

avec

$v=N-3$ : loi du $\chi^2$ ayant v degrés de liberté

$$\chi^2_{i,0,\Phi} = \sum_{n=2}^{N} \left( \frac{\left[ \frac{1}{2.\pi}.\arctan\left[ \frac{-\mathrm{Im}\left(x_{n,i}.x^*_{n-1,i}\right)}{-\mathrm{Re}\left(x^*_{n-1,i}\right)} \right] \right] - m_\Phi}{\sigma_\Phi} \right)^2_{\mathrm{mod}.\pi}$$

$m_\Phi$ et $\sigma_\Phi$ étant définis par :

$$m_\Phi = \frac{1}{N \cdot I} \sum_{i=1}^{I} \sum_{n=1}^{N} \left[ \frac{1}{2 \cdot \pi} \cdot \arctan\left[ \frac{-\mathrm{Im}\left(x_{n,i} \cdot x^*_{n-1,i}\right)}{-\mathrm{Re}\left(x_{n,i} \cdot x^*_{n-1,i}\right)} \right] \right]$$

$$\sigma_\Phi = \frac{1}{N.I-1} \sum_{i=1}^{I} \sum_{n=1}^{N} \left( \left[ \frac{1}{2 \cdot \pi} \cdot \arctan\left[ \frac{-\mathrm{Im}\left(x_{n,i}.x^*_{n-1,i}\right)}{-\mathrm{Re}\left(x_{n,i}.x^*_{n-1,i}\right)} \right] \right] - m_\Phi \right)^2_{\mathrm{mod}\,\pi}$$

Pour le cas ($s_i=1$) et ($p \neq 0$) c'est-à-dire le cas du fouillis dans la cellule, la pondération statistique des cellules est donnée par:

$$P\left(\chi^2_{i,p-1} / s_i = 1\right) = \frac{1}{2^{v/2}.\Gamma(v/2)} \cdot e^{-\frac{\chi^2_{i,p-1}}{2}} \cdot \left(\chi^2_{i,p-1}\right)^{V/2-1}$$

avec

$v = 2.(N - p)$ : loi de $\chi^2$ à $v$ degrés de liberté

$$\chi^2_{i,p-1} = \frac{\sum_{n=p+1}^{N} \left[ \left|\varepsilon_{f,i,n,p-1}\right|^2 + \left|\varepsilon_{b,i,n-1,p-1}\right|^2 \right]}{P_{I,p-1}}$$

$$\left\{ \begin{array}{l} P_{I,0} = \dfrac{1}{I} \sum_{i=1}^{I} P_{i,0} \\[3mm] P_{I,p-1} = \left[ 1 - \left| \mu_{I,p-1} \right|^2 \right] \cdot P_{I,p-2} \end{array} \right.$$

Pour le cas ($s_i$=0) et ($p$=0) c'est-à-dire le cas d'une cible dans la cellule, on prend comme hypothèse que la puissance portée par chaque composante du signal suit une loi normale centrée, de variance $\sigma_c^2$ ( puissance moyenne théorique réémise par la cible). La loi de répartition d'amplitude est alors :

$$\rho\left(\chi^2_{i,0,\rho} \,/\, s_i = 0\right) = \frac{1}{2^{v/2} \cdot \Gamma(v/2)} \cdot e^{-\frac{\chi^2_{i,0,\rho}}{2}} \cdot \left(\chi^2_{i,0,\rho}\right)^{v/2-1}$$

avec

$$v = N \text{:loi du } \chi^2 \text{ à } v \text{ degrés de liberté}$$

$$\chi^2_{i,0,\rho} = \frac{\sum_{n=1}^{N} \left| X_{n,i} \right|^2}{\sigma_c^2}$$

tandis que la loi de répartition en phase est gaussienne :

$$\Phi\left(\chi^2_{i,0,\Phi} \,/\, s_i = 0\right) = \frac{1}{2^{v/2} \cdot \Gamma(v/2)} \cdot e^{-\frac{\chi^2_{i,0,\Phi}}{2}} \cdot \left(\chi^2_{i,0,\Phi}\right)^{V/2-1}$$

avec

$$v = N - 3 \text{: loi du } \chi^2 \text{ à } v \text{ degrés de liberté}$$

$$\chi^2_{i,0,\Phi} = \sum_{n=2}^{N} \left( \frac{\left[ \frac{1}{2.\pi} \cdot \arctan\left[ \frac{-\mathrm{Im}\left(x_{n,i} . x^*_{n-1,i}\right)}{-\mathrm{Re}\left(x_{n,i} . x^*_{n-1,i}\right)} \right] \right] - m_\Phi}{\sigma_\Phi} \right)^2 \mathrm{mod}.\pi$$

$m_\Phi$ et $\sigma_\Phi$ étant définis par :

$$m_\Phi = \frac{1}{N \cdot} \sum_{n=1}^{N} \left[ \frac{1}{2.\pi} \cdot \arctan \left[ \frac{-\text{Im}\left(x_{n,i} . x_{n-1,i}^*\right)}{-\text{Re}\left(x_{n,i} . x_{n-1,i}^*\right)} \right] \right]$$

$$\sigma_\Phi = \frac{1}{N-1} \sum_{n=1}^{N} \left( \left[ \frac{1}{2.\pi} \cdot \arctan \left[ \frac{-\text{Im}\left(x_{n,i} . x_{n-1,i}^*\right)}{-\text{Re}\left(x_{n,i} . x_{n-1,i}^*\right)} \right] \right] - m_\Phi \right)^2_{\text{mod } \pi}$$

Pour le cas ($s_i$=1) et ($p \neq 0$), c'est-à-dire le cas d'une cible dans la cellule, on prend l'hypothèse que la cible n'est pas confondue en doppler avec le fouillis (le cas contraire assimilerait la cellule à une cellule de fouillis, ce qui ne serait plus alors pénalisant), alors les sorties du filtre à chaque ordre p possèdent les caractéristiques de la cible qui n'a pas été filtrée. $P(\chi^2_{i,p-1} / s_i = 0)$ peut alors se décomposer, comme pour le cas ($p = 0$), en deux lois: une loi de répartition en amplitude et une loi de répartition en phase :

$$P\left(\chi^2_{i,p-1} / s_i = 0\right) = \rho\left(\chi^2_{i,p-1,\rho} / s_i = 0\right) \cdot \Phi\left(\chi^2_{i,p-1,\Phi} / s_i = 0\right)$$

La loi de répartition en amplitude vaut :

$$\rho\left(\chi^2_{i,p-1,\rho} / s_i = 1\right) = \frac{1}{2^{\nu/2} . \Gamma(\nu/2)} \cdot e^{-\frac{\chi^2_{i,p-1}}{2}} \left(\chi^2_{i,p-1}\right)^{\nu/2-1}$$

avec

$$\nu = 2.(N - p): \text{loi de } \chi^2 \text{ à } \nu \text{ degrés de liberté}$$

$$\chi^2_{i,p-1} = \frac{\sum_{n=p+1}^{N} \left[ \left|\varepsilon_{f,i,n,p-1}\right|^2 + \left|\varepsilon_{b,i,n-1,p-1}\right|^2 \right]}{\sigma^2_c}$$

La loi de répartition en phase est gaussienne et vaut :

$$\Phi\left(\chi^2_{i,p-1,\Phi} \, / \, s_i = 0\right) = \frac{1}{2^{\nu/2}.\Gamma(\nu/2)} \cdot e^{-\frac{\chi^2_{i,p-1,\Phi}}{2}} \cdot \left(\chi^2_{i,p-1,\Phi}\right)^{\nu/2-1}$$

avec

$$\nu = 2.(N-p-1)-2 : \text{loi du } \chi^2 \text{ à } \nu \text{ degrés de liberté}$$

$$\chi^2_{i,p-1,\Phi} = \frac{\displaystyle\sum_{n=p+2}^{N}\left[\varepsilon^2_{f,\Phi} + \varepsilon^2_{b,\Phi}\right]}{\sigma^2_{\Phi}}$$

$\varepsilon_{f,\Phi}$ et $\varepsilon_{b,\Phi}$ étant définis par :

$$\varepsilon_{f,\Phi} = \frac{1}{2.\pi}\arctan\left[\frac{-\mathrm{Im}\left(\varepsilon_{f,i,n,p-1}\cdot\varepsilon^*_{f,i,n-1,p-1}\right)}{-\mathrm{Re}\left(\varepsilon_{f,i,n,p-1}\cdot\varepsilon^*_{f,i,n-1,p-1}\right)}\right] - m_{\Phi};$$

$$\varepsilon_{b,\Phi} = \frac{1}{2.\pi}\arctan\left[\frac{-\mathrm{Im}\left(\varepsilon_{b,i,n-1,p-1}\cdot\varepsilon^*_{b,i,n-2,p-1}\right)}{-\mathrm{Re}\left(\varepsilon_{b,i,n-1,p-1}\cdot\varepsilon^*_{b,i,n-2,p-1}\right)}\right] - m_{\Phi}$$

avec

$$m_{\Phi} = \frac{1}{2.N}\sum_{n=1}^{N}\left[\Phi_{\varepsilon_f} + \Phi_{\varepsilon_b}\right]$$

et $\sigma_{\Phi}$ étant défini par :

$$\sigma_{\Phi} = \frac{1}{2.N-1}\sum_{n=1}^{N}\left[\left(\Phi_{\varepsilon_f} - m_{\Phi}\right)^2_{\mathrm{mod}\,\pi} + \left(\Phi_{\varepsilon_b} - m_{\Phi}\right)^2_{\mathrm{mod}\,\pi}\right]$$

avec

$$\begin{cases} \Phi_{\varepsilon_f} = \frac{1}{2\pi} \cdot \arctan\left[ \frac{-\mathrm{Im}\left( \varepsilon_{f,i,n,p-1} \cdot \varepsilon^*_{f,i,n-1,p-1} \right)}{-\mathrm{Re}\left( \varepsilon_{f,i,n,p-1} \cdot \varepsilon^*_{f,i,n-1,p-1} \right)} \right] \\[4mm] \Phi_{\varepsilon_b} = \frac{1}{2\pi} \cdot \arctan\left[ \frac{-\mathrm{Im}\left( \varepsilon_{b,i,n-1,p-1} \cdot \varepsilon^*_{b,i,n-2,p-1} \right)}{-\mathrm{Re}\left( \varepsilon_{b,i,n-1,p-1} \cdot \varepsilon^*_{b,i,n-2,p-1} \right)} \right] \end{cases}$$

L'expression du coefficient de reflexion multisegment pondéré (37) est régularisable :

$$E_p = U_p^{stat} + \sum_k \lambda_k \cdot R_{p,k} \qquad (38)$$

avec

$$\begin{cases} U_p^{stat} = E\left( P_p \,/\, \chi^2_{p-1} \right) = \sum_{j=1}^{I} K\left( \chi^2_{j,p-1} \right) \cdot P_{j,p} \\[2mm] \quad\quad \text{avec } P_{j,p} = \sum_{n=p+1}^{N} \left[ \left| \varepsilon_{f,j,n,p} \right|^2 + \left| \varepsilon_{b,j,n,p} \right|^2 \right] \\[2mm] K\left( \chi^2_{j,p-1} \right) = \dfrac{P\left( \chi^2_{j,p-1} \,/\, s_j = 1 \right) . P\left( s_j = 1 \right)}{P\left( \chi^2_{j,p-1} \,/\, s_j = 1 \right) . P\left( s_j = 1 \right) + P\left( \chi^2_{j,p-1} \,/\, s_j = 0 \right) . P\left( s_j = 0 \right)} \\[2mm] R_{p,k} = \int_{-1/2}^{1/2} \left| \dfrac{d^k H_p(f)}{df^k} \right|^2 \cdot df \end{cases}$$

Par dérivation de l'expression (38) par rapport à $\mu_{l,p}$, on trouve le coefficient de reflexion multisegment pondéré statistiquement et régularisé :

$$\frac{\partial E_p}{\partial \mu_{l,p}} = 0$$

$$\mu_{I,p} = -\frac{D_{I,p}^{'*} + 2.\sum_{k=1}^{p-1}\left[\lambda_0 + \lambda_1.(2\pi)^2.(k-p)^2\right].a_{p-1,k}.a_{p-1,p-k}}{G_{I,p}^{'} + 2.\sum_{k=0}^{p-1}\left[\lambda_0 + \lambda_1.(2\pi)^2.(k-p)^2\right].\left|a_{p-1,k}\right|^2}$$

avec

$$\begin{cases} D_{I,p}^{'} = 2.\sum_{i=1}^{I} K\left(\chi_{i,p-1}^2\right). \sum_{n=p+1}^{N} \varepsilon_{b,i,n-1,p-1}.\varepsilon_{f,n,p-1}^{*} \\ G_{I,p}^{'} = \sum_{i=1}^{I} K\left(\chi_{i,p-1}^2\right). \sum_{n=p+1}^{N}\left[\left|\varepsilon_{f,i,n,p-1}\right|^2 + \left|\varepsilon_{b,i,n-1,p-1}\right|^2\right] \end{cases}$$

Si l'on cherche à comparer ce procédé de régularisation de la méthode de Burg avec le procédé de régularisation de Kitagawa et Gersch appliqué à la méthode des moindres carrés classique, on peut remarquer, en reprenant l'écriture de la relation (4) :

$$c_{k-l} = \sum_{n} x_{n-l}.x_{n-k}^{*}$$

que l'on a:

$$D_{p}^{*} = 2\sum_{l=0}^{p-1}\sum_{k=1}^{p} a_{p-1,l}.a_{p-1,p-k}.c_{k-l}$$

et :

$$G_{p} = 2\sum_{l=0}^{p-1}\sum_{k=0}^{p-1} a_{p-1,l}.a_{p-1,k}^{*}.c_{k-l}$$

car:

$$\begin{cases} \varepsilon_{f,n,p-1} = \sum_{k=0}^{p-1} a_{p-1,k} \cdot x_{n-k} \\ \varepsilon_{b,n-1,p-1} = \sum_{k=0}^{p-1} a^*_{p-1,k} \cdot x_{n-p+k} \end{cases}$$

de sorte que le coefficient de réflexion de la méthode de Burg régularisée défini à la relation (29) peut aussi s'écrire :

$$\mu_p = -\frac{\displaystyle\sum_{l=0}^{p-1}\sum_{k=1}^{p} a_{p-1,l} \cdot a_{p-1,p-k} \cdot c_{k-l} + \sum_{k=1}^{p-1}\left[\lambda_0 + \lambda_1 \cdot (2\pi)^2 \cdot (k-p)^2\right] \cdot a_{p-1,k} \cdot a_{p-1,p-k}}{\displaystyle\sum_{l=0}^{p-1}\sum_{k=0}^{p-1} a_{p-1,l} \cdot a^*_{p-1,k} \cdot c_{k-l} + \sum_{k=0}^{p-1}\left[\lambda_0 + \lambda_1 \cdot (2\pi)^2 \cdot (k-p)^2\right] \cdot \left|a_{p-1,k}\right|^2}$$

ou, en utilisant les symboles de Kronecker:

$$\mu_p = -\frac{\displaystyle\sum_{l=0}^{p-1}\sum_{k=1}^{p} a_{p-1,l} \cdot a_{p-1,p-k} \cdot \left(c_{k-l} + \left[\lambda_0 + \lambda_1 \cdot (2\pi)^2 \cdot (k-p)^2\right] \cdot \delta_{l,k}\right)}{\displaystyle\sum_{l=0}^{p-1}\sum_{k=0}^{p-1} a_{p-1,l} \cdot a^*_{p-1,k} \cdot \left(c_{k-l} + \left[\lambda_0 + \lambda_1 \cdot (2\pi)^2 \cdot (k-p)^2\right] \cdot \delta_{l,k}\right)}$$

Cela peut encore s'écrire :

$$\mu_p = -\frac{\displaystyle\sum_{l=0}^{p-1}\sum_{k=1}^{p} a_{p-1,l} \cdot a_{p-1,p-k} \cdot c'_{k-l}}{\displaystyle\sum_{l=0}^{p-1}\sum_{k=0}^{p-1} a_{p-1,l} \cdot a^*_{p-1,k} \cdot c'_{k-l}}$$

avec :

$$\begin{cases} c'_{k-l} = c_{k-l} & si \quad k \neq l \\ c'_{k-l} = c_{k-l} + \left[\lambda_0 + \lambda_1 \cdot (2\pi)^2 \cdot (k-p)^2\right] & si \quad k = l \end{cases}$$

On reconnaît dans les termes $c'_{k-l}$ les termes d'une matrice implicite d'autocorrélation :

$$\Omega'_p = \Omega_p + D^T.D:$$

où $\Omega_p$ est la matrice usuelle d'autocorrélation des échantillons de signaux :

$$\Omega_p = \left\{ c_{k-l} \right\}_{k,l \in (1,p)}$$

et D la matrice diagonale :

$$D = Diag\left\{ \left[ \lambda_0 + \lambda_1.(2\pi)^2.p^2 \right]^{\frac{1}{2}}, \left[ \lambda_0 + \lambda_1.(2\pi)^2.(p-1)^2 \right]^{\frac{1}{2}},..., \left[ \lambda_0 + \lambda_1.(2\pi)^2 \right]^{\frac{1}{2}} \right\}$$

Cette matrice d'autocorrélation implicite correspond exactement à la matrice d'autocorrélation explicite de la méthode d'analyse spectrale à modèle prédictif autorégressif obtenue par les moindres carrés régularisés développés par Kitagawa et Gersch.

Cela montre qu'avec le nouveau procédé de régularisation proposé de la méthode du maximum d'entropie de Burg, on obtient un lissage du spectre analogue à celui obtenu avec la méthode des moindres carrés régularisés de Kitagawa et Gersch tout en conservant les atouts liés à la méthode du maximum d'entropie de Burg qui sont le fait d'avoir un coût calculatoire faible et d'être implantable en temps réel avec une structure en treillis, d'être généralisable au cas multisegment introduit par Haykin dans le cas du filtrage fréquentiel ou du lissage temporel de l'analyse spectrale et d'être robuste face au bruit de calcul, aux erreurs de quantification et d'arrondis.

Face au procédé de régularisation de la méthode du maximum d'entropie de Burg par minimisation de l'énergie libre de Silverstein et Pimbley, on peut montrer que la régularisation obtenue avec le nouveau procédé de régularisation proposé est meilleure. En effet, le procédé de régularisation de la méthode du maximum d'entropie de Burg par minimisation de l'énergie libre ne fait intervenir que la puissance résiduelle des erreurs de prédiction et donc régularise la solution globalement en empêchant le dénominateur du coefficient de réflexion de s'annuler alors que le nouveau procédé de régularisation proposé contraint directement la platitude du spectre.

Pour s'en convaincre, on se rappelle que la solution du minimum d'énergie libre qui consiste à rechercher la racine inférieure à un en module, de l'équation à coefficients réels du troisième degré en $\gamma_p$ de la relation (10) :

$$\left( 1 - \gamma_p^2 \right).\left( \gamma_p.G_p + \left| D_p \right| \right) = -2\alpha\gamma_p$$

$D_p$ et $G_p$ ayant leurs définitions habituelles des relations (10). Cette racine peut se mettre sous la forme :

$$\gamma_p = -\frac{\left| D_p \right|}{G_p + \rho_\alpha} \qquad \text{avec } \rho_\alpha \in [0,+\infty[$$

ce qui donne un coefficient de réflexion de la forme :

$$\mu_p = -\frac{D*p}{G_p + \rho_\alpha}$$

Lorsque p est proche de l'ordre optimal ou est surestimé et que le modèle de prédiction devient fiable ou bruité, on a :

$$D_p^* = \frac{2}{N-p} \sum_{n=p+1}^{N} \varepsilon_{b,n-1,p-1}^* \cdot \varepsilon_{f,n,p-1} \xrightarrow[p \to p_{opt}]{} 0$$

et :

$$G_p = \frac{1}{N-p} \sum_{n=p+1}^{N} \left[ \left| \varepsilon_{f,n,p-1} \right|^2 + \left| \varepsilon_{b,n-1,p-1} \right|^2 \right] \xrightarrow[p \to p_{opt}]{} 2.\sigma^2$$

où $\sigma^2$ est une variance de bruit blanc.

Or, pour $\rho_\alpha = 0$, c'est à dire sans régularisation, les bruits de calcul $b_c$ modifient le rapport de $D_p*$ et $G_p$ et donc le coefficient de réflexion $\mu_p$, :

$$\mu_p(+b_c) \xrightarrow[p \to p_{opt}]{} \frac{O_1(b_c)}{O_2(b_c)} \neq 0$$

et introduisent des pôles parasites dans la fonction de transfert $H_p(z)$ du filtre prédictif associé.

En revanche, dans le cas du minimum d'énergie libre ($\rho_\alpha \neq 0$), $O_2(b_c)$ devient négligeable devant $\rho_\alpha$ et ainsi le coefficient de réflexion $\mu_p$ se rapproche de zéro en s'affranchissant de la pollution introduite par le bruit de calcul. Ceci évite les problèmes de singularité qui induisent des pôles parasites dans la fonction de transfert $H_p(z)$ du filtre prédictif associé (pics parasites dans le spectre).

On peut alors remarquer qu'il n'est pas nécessaire de résoudre l'équation à coefficients réels du troisième degré en $\gamma_p$ :

$$\left(1 - \gamma_p^2\right).\left(\gamma_p.G_p + \left|D_p\right|\right) = -2\alpha\gamma_p$$

mais qu'il suffit de trouver un $\rho_\alpha$ assez grand tel que :

$$\mu_p = - \frac{D*_p}{G_p + \rho_\alpha}$$

soit proche de zéro lorsque p tend vers $p_{opt}$.

La figure 1 illustre le schéma d'un circuit de calcul 1 des coefficients complexes $\{a_{p,0},...,a_{p,p}\}$ d'un modèle de prédiction d'ordre p à partir des coefficients de réflexion $\{\mu_1,...,\mu_p\}$, selon la méthode du maximum d'entropie de Burg régularisée ou non par le nouveau procédé proposé. Ce circuit de calcul met en oeuvre la relation (12) de récurrence sur l'ordre p du modèle :

$$a_{p,k} = a_{p-1,k} + \mu_p.a*_{p-1,p-k} \quad \text{avec } k \in [1,...,p-1] \tag{40}$$

$*$ désignant l'opérateur conjugué, avec :

$$\begin{cases} a_{k,0} = 1 & \forall k \in [o,...,p] \\[2em] a_{p,p} = \mu_p \end{cases}$$

La première ligne qui détermine tous les coefficients $a_{k,0}$ d'indice zéro de tous les modèles prédictifs d'ordre 0 à p ne contient aucun opérateur puisque tous ces coefficients ont une valeur unité.

Les lignes suivantes qui déterminent les coefficients $a_{p,k}$ d'indice k variant de 1 à p-1 renferment une succession d'opérateurs conjugué ($*$), multiplieurs ($\times$) et sommateurs ($\Sigma$) mettant en oeuvre la relation de récurrence (30).

Par exemple, pour le terme $a_{2,1}$ la relation de récurrence (40) donne la définition :

$$a_{2,1} = a_{1,1} + \mu_2 \cdot a_{1,1}^*$$

de sorte qu'il est obtenu à l'aide d'un sommateur ($\Sigma$) à deux entrées recevant sur une première entrée le terme $a_{1,1}$ qui n'est autre que le coefficient de réflexion $\mu_1$ et sur une deuxième entrée le terme $\mu_2 \cdot a_{1,1}^*$ délivré par un multiplicateur ($\times$) recevant d'une part le terme $\mu_2$ et d'autre part le terme $a_{1,1}$ conjugué ou $\mu_1$ conjugué délivré par l'intermédiaire d'un opérateur conjugué ($*$) intercalé entre l'entrée du terme $\mu_1$ et l'entrée du multiplieur ($\times$).

Pour le terme $a_{3,1}$ la relation de récurrence (29) donne la définition :

$$a_{3,1} = a_{2,1} + \mu_3 \cdot a*_{2,2}$$

ce qui est réalisé au moyen d'un sommateur (Z), d'un multiplieur ($\times$) et d'un opérateur conjugué ($*$) convenablement connectés.

Il en est ainsi jusqu'au terme $a_{p,p}$ qui est pris égal au coefficient de réflexion $\mu_p$.

La figure 2 illustre le schéma d'un circuit de calcul d'un coefficient de réflexion $\mu_m$, m variant de 1 à p, selon le nouveau procédé proposé de régularisation de la méthode du maximum d'entropie de Burg.

On distingue en bas de la figure 2 un filtre en treillis 2 donnant les erreurs de prédiction directe et rétrograde $\varepsilon_{f,n,m}$ et $\varepsilon_{b,n,m}$, m variant de 1 à p, en fonction de la valeur de l'échantillon de signal $x_n$. Ce filtre en treillis 2 met en oeuvre les relations de récurrence sur l'ordre qui lient dans la méthode du maximum d'entropie de Burg les erreurs de prédiction directe et rétrograde d'un modèle d'ordre p aux erreurs de prédiction directe et rétrograde du modèle d'ordre immédiatement inférieur p-1 :

$$\begin{cases} \varepsilon_{f,n,p} = \varepsilon_{f,n,p-1} + \mu_p \cdot \varepsilon_{b,n-1,p-1} \\[2em] \varepsilon_{b,n,p} = \varepsilon_{b,n-1,p-1} + \mu_p^* \cdot \varepsilon_{f,n,p-1} \end{cases}$$

avec :

$$\varepsilon_{f,n,0} = \varepsilon_{b,n,0} = x_n$$

Ce filtre en treillis 2 comporte une suite de p étages identiques définissant deux voies parallèles, l'une sur laquelle sont disponibles les erreurs de prédiction directe $\varepsilon_{f,n,m}$, m variant de 1 à p, et l'autre sur laquelle sont disponibles les erreurs de prédictions rétrograde $\varepsilon_{b,n-1,m}$, m variant de 1 à p. Chaque étage comporte sur la voie des erreurs de prédiction directe un sommateur ($\Sigma$) à deux entrées, sur la voie des erreurs de prédiction rétrograde une cellule à retard ($Z^{-1}$) retardant la valeur de l'erreur d'un échantillon de signal, suivie d'un sommateur ($\Sigma$), et, entre ces deux voies, deux multiplieurs ($\times$) effectuant les produits croisés, l'un de l'erreur de prédiction directe disponible en entrée de l'étage avec le conjugué du coefficient de réflexion $\mu*_m$, m étant l'ordre de l'étage, pour l'appliquer au sommateur ($\Sigma$) de la voie de l'erreur de prédiction rétrograde, l'autre de l'erreur de prédiction rétrograde disponible en sortie de la cellule à retard de l'étage avec le coefficient de réflexion $\mu_m$, m étant l'ordre de l'étage, pour l'appliquer au sommateur

($\Sigma$) de la voie de l'erreur de prédiction directe.

En plus du filtre en treillis 2, on distingue des circuits 3 et 4 de calcul des termes $D*_m$ et $G_m$, m variant de 1 à p, du numérateur et du dénominateur de la fraction de définition du coefficient de réflexion $\mu_m$ de la méthode du maximum d'entropie de Burg :

$$\begin{cases} D_m^* = \dfrac{2}{N-m} \sum_{n=m+1}^{N} \varepsilon_{b,n-1,m-1}^* \cdot \varepsilon_{f,n,m-1} \\ G_m = \dfrac{1}{N-m} \sum_{n=m+1}^{N} \left[ \left| \varepsilon_{f,n,m-1} \right|^2 + \left| \varepsilon_{b,n-1,m-1} \right|^2 \right] \end{cases}$$

Le circuit 3 de calcul du terme $D*_m$ comporte un sommateur 30 à N-m entrées connectées aux sorties des N-m derniers étages de deux registres à décalage à N étages 31 et 32 par l'intermédiaire de circuits multiplieurs (x) et d'opérateurs conjugué ($*$). Le registre à décalage 31 est relié aux entrées du sommateur 30 par des opérateurs conjugué ($*$) et des circuits multiplieurs ($\times$). Il est connecté par son entrée série au filtre en treillis 2, à la sortie du m-1$^{\text{ième}}$ étage, sur la voie de l'erreur de prédiction directe. Le registre à décalage 32 est relié aux entrées du sommateur 30 uniquement par les circuits multiplieurs ($\times$) et est connecté par son entrée série au filtre en treillis 2, entre le circuit à retard ($Z^{-1}$) et le sommateur ($\Sigma$) du m$^{\text{ième}}$ étage, sur la voie de l'erreur de prédiction rétrograde. Un circuit multiplieur ($\times$) connecté en sortie du sommateur 30 permet d'appliquer une pondération en 2/(N-m) après la sommation pour obtenir le terme $D*_m$.

Le circuit 4 de calcul du terme $G_m$ comporte un sommateur 40 à 2(N-m) entrées connectées aux sorties des N-m derniers étages de deux registres à décalage à N étages 41 et 42 par l'intermédiaire de circuits individuels de calcul du carré constitués d'un circuit multiplieur ($\times$) à deux entrées réunies avec un opérateur conjugué ($*$) intercalé dans l'une de ses entrées. L'un 41 des registres à décalage est connecté par son entrée série au filtre en treillis 2, à la sortie du m-1$^{\text{ième}}$ étage, sur la voie de l'erreur de prédiction directe tandis que l'autre registre à décalage 42 est connecté par son entrée série au filtre en treillis 2, entre le circuit à retard ($Z^{-1}$) et le sommateur ($\Sigma$) du m$^{\text{ième}}$ étage, sur la voie de l'erreur de prédiction rétrograde. Un circuit multiplieur ($\times$) connecté en sortie du sommateur 40 permet d'appliquer une pondération en 1/(N-m) après la sommation pour obtenir le terme $G_m$.

En plus des circuits de calcul 1, 2, 3 et 4 que l'on retrouve dans les dispositifs de mise en oeuvre en temps réel de l'analyse spectrale par la méthode du maximum d'entropie de Burg non régularisée, on trouve des circuits de calcul spécifiques 5, 6 et 7 permettant de mettre en oeuvre le nouveau procédé de régularisation proposé.

Les circuits de calcul 5 permettent de calculer des paramètres intermédiaires $\beta_{m-1,k}$ tandis que les circuits de calcul 6 et 7 permettent de calculer les termes correctifs de régularisation à appliquer au numérateur et au dénominateur de la fraction de définition du coefficient de réflexion $\mu_m$.

Les circuits de calcul 5 permettent de calculer les paramètres intermédiaires :

$$\beta_{m-1,k} = \lambda_0 + \lambda 1 (2\pi)^2 .(m\text{-}k)^2 \qquad \text{avec } k \in [1,...,m\text{-}1]$$

Ils sont constitués chacun d'un sommateur ($\Sigma$) à deux entrées recevant directement sur une première entrée la constante $\lambda_0$ et sur une deuxième entrée la constante $\lambda_1$ par l'intermédiaire d'un multiplieur ($\times$) effectuant le produit de la constante $\lambda_1$ par le coefficient $(2\pi)^2 .(m\text{-}k)^2$.

Le circuit de calcul 6 permet de calculer le terme correctif:

$$2. \sum_{k=1}^{m-1} \beta_{m-1,k} \cdot a_{m-1,k} \cdot a_{m-1,m-k}$$

appliqué au numérateur du quotient définissant le coefficient de réflexion $\mu_m$. Il consiste en un sommateur 60 à m-1 entrées, la k$^{\text{ième}}$ entrée recevant le coefficient $a_{m-1,k}$ par l'intermédiaire de deux multiplieurs ($\times$) disposés à la suite, l'un effectuant un produit par le coefficient $a_{m-1,m-k}$, l'autre le produit par $\beta_{m-1,k}$. Un multiplieur ($\times$) placé en sortie du sommateur 60 permet d'appliquer une pondération par 2 pour parvenir à l'expression complète du terme correctif du numérateur.

Le circuit de calcul 7 permet de calculer le terme correctif :

$$2 . \sum_{k=0}^{m-1} \beta_{m-1,k} \cdot \left| a_{m-1,k} \right|^2$$

appliqué au dénominateur du quotient définissant le coefficient de réflexion $\mu_m$. Il consiste en un sommateur 70 à m-1 entrées, la $k^{ième}$ entrée recevant le coefficient $a_{m-1,k}$ par l'intermédiaire d'un circuit individuel de calcul du carré constitué d'un circuit multiplieur ($\times$) à deux entrées réunies avec un opérateur conjugué ($*$) intercalé dans l'une de ses entrées. Un multiplieur ($\times$) placé en sortie du sommateur 70 permet d'appliquer une pondération par 2 pour parvenir à l'expression complète du terme correctif du dénominateur.

Les sorties des circuits de calcul 3 et 6 sur lesquelles sont disponibles le terme $D*_m$ du numérateur du quotient de définition du coefficient de réflexion $\mu_m$ dans la méthode du maximum d'entropie de Burg et le terme correctif de ce numérateur pour la régularisation sont connectées aux deux entrées d'un sommateur 8 équipé en sortie d'un circuit multiplieur ($\times$) 9 opérant une multiplication par -1 pour tenir compte du signe moins figurant dans le quotient de définition du coefficient de réflexion.

Les sorties des circuits de calcul 4 et 7 sur lesquelles sont disponibles le terme $G_m$ du dénominateur du quotient de définition du coefficient de réflexion $\mu_m$ dans la méthode du maximum d'entropie de Burg et le terme correctif de ce dénominateur pour la régularisation sont connectées aux deux entrées d'un sommateur 10.

Pour obtenir le coefficient de réflexion $\mu_m$, le terme régularisé du numérateur de son quotient de définition, disponible en sortie du circuit multiplieur 9, est divisé par le terme régularisé du dénominateur de son quotient de définition, disponible en sortie du sommateur 10, au moyen d'un circuit multiplieur 11 à deux entrées dont l'une est connectée directement à la sortie du circuit multiplieur 9 et dont l'autre est connectée à la sortie du sommateur 10 par l'intermédiaire d'un circuit inverseur 12.

Les figures 3, 4 et 5 montrent les différents spectres de fréquence obtenus par la méthode de Burg respectivement non régularisée, régularisée par le procédé du minimum d'énergie libre et régularisée par le nouveau procédé proposé, pour un signal complexe présentant deux raies de fréquence dont on a tiré, au cours de dix tirages bruités, dix échantillons régulièrement répartis.

Sur la figure 3 qui représente les spectres obtenus pour les dix tirages bruités en mettant en oeuvre la méthode de Burg non régularisée jusqu'à l'ordre maximum possible de neuf (10-1), on constate que les différentes versions du spectre obtenues pour les différents tirages ne se recouvrent que pour les deux raies de fréquence existant effectivement et sont affectées de raies parasites de fortes amplitudes différentes selon les versions. Il en résulte un spectre moyen trop bruité pour être exploitable.

Sur la figure 4 qui représente les spectres obtenus pour les dix tirages bruités en mettant en oeuvre la méthode de Burg jusqu'à l'ordre maximum possible de neuf, avec une régularisation par le procédé du minimum d'énergie libre prenant en compte un coefficient $\alpha$ égal à 1, on constate que les différentes versions du spectre obtenues pour les différents tirages recouvrent toujours pour les deux raies de fréquence existant effectivement et présentent des raies parasites d'amplitudes beaucoup moins fortes qui ont tendance à se superposer. Le spectre moyen résultant est devenu exploitable. Mais on constate que la régularisation a fait perdre pas mal d'amplitude aux deux raies de fréquence réellement existantes.

Sur la figure 5 qui représente les spectres obtenus pour les dix tirages bruités en mettant en oeuvre la méthode de Burg jusqu'à l'ordre maximum possible de neuf, avec une régularisation selon le nouveau procédé proposé prenant en compte un coefficient $\lambda_0$ égal à 1 et un coefficient $\lambda_1$ égal à 0,001, on constate que les différents spectres ne présentent plus que les deux raies existant effectivement avec des ondulations mineures. Par rapport aux spectres de la figure 4, on remarque que ce nouveau procédé de régularisation a provoqué une moindre atténuation des deux raies de fréquence existant effectivement et une meilleure atténuation des raies de fréquence parasites. Il est donc meilleur.

**Revendications**

**1.** Procédé de détermination du spectre de fréquence d'un signal physique échantillonné $\{x_n\}$ consistant à évaluer les coefficients $\{a_{p,k}\}$ d'un modèle de prédiction d'ordre p qui correspondent à une loi de prédiction du $n^{ième}$ échantillon xn à partir des n-p échantillons précédents $\{x_{n-k}\}$, k variant de 1 à p, de la forme :

$$x_n = \varepsilon_{f,n,p} - \sum_{k=1}^{p} a_{p,k} \cdot x_{n-k}$$

où $\varepsilon_{f,n,p}$ est une erreur de prédiction, dans le sens direct, par le modèle d'ordre p, de l'échantillon $x_n$, et qui donnent une estimation de la puissance du spectre de fréquence du signal échantillonné sous la forme :

$$|X(f)|^2 = \frac{P_p}{\left| \sum_{k=0}^{p} a_{p,k} \cdot e^{-j2\pi kf} \right|^2}$$

où $a_{p,0}$ vaut 1 et où $P_p$ est la puissance de l'erreur de prédiction directe du modèle d'ordre p pour l'échantillon $x_n$ lorsque le modèle est fiable c'est à dire que la dite erreur est un bruit blanc, à partir d'une loi de récurrence sur l'ordre p du modèle de la forme :

$$a_{p,k} = a_{p-1,k} + \mu_p \cdot a*_{p-1,p-k}$$

$*$ désignant l'opérateur conjugué,
avec :

$$a_{p,0} = 1$$

$$a_{p-1,0} = 1$$

$$k \in [1,\dots p-1]$$

$\mu_p$ étant un coefficient de réflexion déterminé à partir des termes :

$$\begin{cases} D_p = \dfrac{2}{N-p} \sum_{n=p+1}^{N} \varepsilon_{b,n-1,p-1} \cdot \varepsilon^*_{f,n,p-1} \\ G_p = \dfrac{1}{N-p} \sum_{n=p+1}^{N} \left[ \left| \varepsilon_{f,n,p-1} \right|^2 + \left| \varepsilon_{b,n-1,p-1} \right|^2 \right] \end{cases}$$

où $\varepsilon_{f,n,p-1}$ désigne l'erreur de prédiction, dans le sens direct, par le modèle de prédiction d'ordre p - 1, sur l'échantillon $x_n$ et $\varepsilon_{b,n-1,p-1}$ l'erreur de prédiction, dans le sens rétrograde, par le modèle d'ordre p- 1, sur l'échantillon $x_{n-p}$ :

$$x_{n-p} = \varepsilon_{b,n-1,p-1} - \sum_{k=1}^{p-1} a^*_{p-1,k} \cdot x_{n-p+k}$$

ce procédé étant **caractérisé en ce que** le coefficient de réflexion $\mu_p$ est déterminé par une relation de la forme :

$$\mu_p = -\frac{D_p^* + 2\sum_{k=1}^{p-1}\left[\lambda_0 + \lambda_1.(2\pi)^2.(k-p)^2\right].a_{p-1,k}.a_{p-1,p-k}}{G_p + 2\sum_{k=0}^{p-1}\left[\lambda_0 + \lambda_1.(2\pi)^2.(k-p)^2\right].\left|a_{p-1,k}\right|^2}$$

où $\lambda_0$ et $\lambda_1$ sont des coefficients réels positifs.

2. Procédé de détermination du spectre de fréquence de la moyenne d'une famille de I signaux physiques échantillonnés $\{x_n\}_i$ consistant à évaluer les coefficients $\{a_{p,k}\}$ d'un modèle de prédiction d'ordre p qui correspondent à une loi de prédiction du $n^{ième}$ échantillon $x_{i,n}$ à partir des n-p échantillons précédents $\{x_{i,n-k}\}$, k variant de 1 à p, de la forme :

$$x_{i,n} = \varepsilon_{f,i,n,p} - \sum_{k=1}^{p} a_{p,k}.x_{i,n-k} \qquad i \in [1,...,I]$$

où $\varepsilon_{f,i,n,p}$ est une erreur de prédiction, dans le sens direct, par le modèle d'ordre p, de l'échantillon $x_{i,n}$ du signal i et qui donnent une estimation de la moyenne des puissances des spectres de fréquence des signaux échantillonnés sous la forme :

$$\left|X(f)\right|^2 = \frac{P_{I,p}}{\left|\sum_{k=0}^{p} a_{p,k}.e^{-j2\pi kf}\right|^2}$$

où $a_{p,0}$ vaut 1 et où $P_{I,p}$ est la moyenne des puissances des erreurs de prédiction directe du modèle d'ordre p pour les $n^{ièmes}$ échantillons $x_{i,n}$ des I signaux lorsque le modèle est fiable c'est-à-dire que les dites erreurs sont des bruits blancs, à partir d'une loi de récurrence sur l'ordre p du modèle de la forme :

$$\alpha_{p,k} = a_{p-1,k} + \mu_{I,p}.a^*_{p-1,p-k}$$

∗ désignant l'opérateur conjugué,
avec :

$$a_{p,0} = 1$$

$$a_{p-1,0} = 1$$

$$k \in [1,...p-1]$$

$\mu_{I,p}$ étant un coefficient de réflexion déterminé à partir des termes :

$$\begin{cases} D_{I,p} = \dfrac{2}{(N-p).I} \displaystyle\sum_{i=1}^{I} \sum_{n=p+1}^{N} \varepsilon_{b,i,n-1,p-1} \cdot \varepsilon^{*}_{f,i,n,p-1} \\[4mm] G_{I,p} = \dfrac{1}{(N-p).I} \displaystyle\sum_{i=1}^{I} \sum_{n=p+1}^{N} \left[ \left| \varepsilon_{f,i,n,p-1} \right|^2 + \left| \varepsilon^{*}_{b,i,n-1,p-1} \right|^2 \right] \end{cases}$$

où $\varepsilon_{f,i,n,p-1}$ désigne l'erreur de prédiction, dans le sens direct, par le modèle de prédiction d'ordre p - 1, sur le n[ième] échantillon du i[ème] signal et $\varepsilon_{b,i,n-1,p-1}$ l'erreur de prédiction, dans le sens rétrograde, par le modèle d'ordre p - 1, sur le n-p[ième] échantillon du i[ème] signal :

$$x_{i,n-p} = \varepsilon_{b,i,n-1,p-1} - \sum_{k=1}^{p-1} a^{*}_{p-1,k} \cdot x_{n-p+k}$$

ce procédé étant **caractérisé en ce que** le coefficient de réflexion $\mu_{I,p}$ est déterminé par une relation de la forme :

$$\mu_{I,p} = -\frac{D^{*}_{I,p} + 2 \displaystyle\sum_{k=1}^{p-1} \left[ \lambda_0 + \lambda_1.(2\pi)^2.(k-p)^2 \right] . a_{p-1,k} . a_{p-1,p-k}}{G_{I,p} + 2 \displaystyle\sum_{k=0}^{p-1} \left[ \lambda_0 + \lambda_1.(2\pi)^2.(k-p)^2 \right] . \left| a_{p-1,k} \right|^2}$$

où $\lambda_0$ et $\lambda_1$ sont des coefficients réels positifs.

3.  Procédé de détermination du spectre de fréquence de la moyenne d'une famille de I signaux physiques échantillonnés $\{x_n\}_i$ consistant à évaluer les coefficients $\{a_{p,k}\}$ d'un modèle de prédiction d'ordre p qui correspondent à une loi de prédiction du n[ième] échantillon $x_{i,n}$ à partir des n-p échantillons précédents $\{x_{i,n-k}\}$, k variant de 1 à p, de la forme :

$$x_{i,n} = \varepsilon_{f,i,n,p} - \sum_{k=1}^{p} a_{p,k} . x_{i,n-k} \qquad i \in [1,...,I]$$

où $\varepsilon_{f,i,n,p}$ est une erreur de prédiction, dans le sens direct, par le modèle d'ordre p, de l'échantillon $x_{i,n}$ du signal i et qui donnent une estimation de la moyenne des puissances des spectres de fréquence des signaux échantillonnés sous la forme :

$$|X(f)|^2 = \frac{P_{I,p}}{\left|\sum_{k=0}^{p} a_{p,k}.e^{-j2\pi kf}\right|^2}$$

où $a_{p,0}$ vaut 1 et où $P_{I,p}$ est la moyenne des puissances des erreurs de prédiction directe du modèle d'ordre p pour les n$^{ièmes}$ échantillons $x_{i,n}$ des I signaux lorsque le modèle est fiable c'est-à-dire que les dites erreurs sont des bruits blancs, à partir d'une loi de récurrence sur l'ordre p du modèle de la forme :

$$a_{p,k} = a_{p-1,k} + \mu_{I,p}.a*_{p-1,P-k}$$

∗ désignant l'opérateur conjugué,
avec :

$$a_{p,0} = 1$$

$$a_{p-1,0} = 1$$

$$k \in [1,...p-1]$$

**caractérisé en ce que** le coefficient de réflexion $\mu_{I,p}$ est défini par la relation :

$$\mu_{I,p} = -\frac{D'^*_{I,p} + 2.\sum_{k=1}^{p-1}\left[\lambda_0 + \lambda_1.(2\pi)^2.(k-p)^2\right].a_{p-1,k}.a_{p-1,p-k}}{G'_{I,p} + \sum_{k=0}^{p-1}\left[\lambda_0 + \lambda_1.(2\pi)^2.(k-p)^2\right].\left|a_{p-1,k}\right|^2}$$

avec

$$\begin{cases} D'_{I,p} = 2.\sum_{i=1}^{I} K\left(\chi^2_{i,p-1}\right).\sum_{n=p+1}^{N} \varepsilon_{b,i,n-1,p-1}.\varepsilon^*_{f,n,p-1} \\ G'_{I,p} = \sum_{i=1}^{I} K\left(\chi^2_{i,p-1}\right).\sum_{n=p+1}^{N}\left[\left|\varepsilon_{f,i,n,p-1}\right|^2 + \left|\varepsilon_{b,i,n-1,p-1}\right|^2\right] \end{cases}$$

où la pondération

$$K\left(\chi^2_{i,p-1}\right)$$

s'exprime comme suit :

$$K\left(\chi^2_{i,p-1}\right) = \frac{P\left(\chi^2_{i,p-1} / s_j = 1\right).P(s_i = 1)}{P\left(\chi^2_{i,p-1} / s_j = 1\right).P(s_i = 1) + P\left(\chi^2_{i,p-1} / s_i = 0\right).P(s_i = 0)}$$

$s_i$ étant égal à 1 si la cellule i de la fenêtre d'estimation contient uniquement du fouillis et à 0 si la cellule i de la fenêtre d'estimation contient une cible, $P(s_i = 1)$ étant égal, quelque soit i, à la probabilité a priori $p_1$ qu'une cellule de la fenêtre d'estimation ne contienne que du fouillis, $P(s_i = 0)$ étant égal, quelque soit i, à la probalité a priori qu'une cellule de la fenêtre d'estimation contienne une cible, $p_1$ et $p_0$ étant lié par la relation :

$$p_0 + p_1 = 1$$

et la variable $\chi^2_{i,p-1}$ valant:

$$\chi^2_{i,p-1} = \frac{\sum_{n=p=1}^{N}\left[\left|\varepsilon_{f,i,n,p-1}\right|^2 + \left|\varepsilon_{b,i,n-1,p-1}\right|^2\right]}{P_{I,p-1}}$$

où $\varepsilon_{f,i,n,p-1}$ désignant l'erreur de prédiction, dans le sens direct, par le modèle de prédiction d'ordre p-1, sur le $n^{ième}$ échantillon du $i^{ème}$ signal, $\varepsilon_{b,i,n-1,p-1}$ l'erreur de prédiction, dans le sens rétrograde, par le modèle d'ordre p - 1, sur le n-p$^{ième}$ échantillon du $i^{ème}$ signal :

$$x_{i,n-p} = \varepsilon_{b,i,n-1,p-1} - \sum_{k=1}^{p-1} a^*_{p-1,k}.x_{n-p+k}$$

et $P_{I,p-1}$ la moyenne des puissance des erreurs de prédiction du modèle d'ordre p-1.

**4.** Dispositif de détermination du spectre de fréquence d'un signal physique échantillonné $\{x_n\}$ comportant :

- des premiers moyens de calcul (1) pour évaluer les coefficients $\{a_{p,1},...,a_{p,p}\}$ d'un modèle de prédiction d'ordre p, qui correspondent à une loi de prédiction du $n^{ième}$ échantillon $x_n$ à partir des n-p échantillons précédents $\{x_{n-k}\}$, k variant de 1 à p, de la forme :

$$x_n = \varepsilon_{f,n,p} - \sum_{k=1}^{p} a_{p,k}.x_{n-k}$$

où $\varepsilon_{f,n,p}$ est une erreur de prédiction, dans le sens direct, par le modèle d'ordre p, de l'échantillon $x_n$, et comprennent des moyens pour donner une estimation de la puissance du spectre de fréquence du signal échantillonné sous la forme :

$$|X(f)|^2 = \frac{P_p}{\left|\sum_{k=0}^{p} a_{p,k}\cdot e^{-j2\pi kf}\right|^2}$$

où $a_{p,0}$ vaut 1 et où $P_p$ est la puissance de l'erreur de prédiction directe du modèle d'ordre p pour l'échantillon $x_n$ lorsque le modèle est fiable c'est-à-dire que la dite erreur est un bruit blanc, à partir d'une loi de récurrence sur l'ordre p du modèle de la forme :

$$a_{p,k} = a_{p-1,k} + \mu_p \cdot a*_{p-1,p-k}$$

$*$ désignant l'opérateur conjugué,
avec:

$$a_{p,0} = 1$$

$$a_{p-1,0} = 1$$

$$k \in [1,...p\text{-}1]$$

$\mu_p$ étant un coefficient de réflexion,

- des deuxième moyens de calcul (2) ayant la structure d'un filtre en treillis pour déterminer les erreurs de prédiction directe $\varepsilon_{f,n,m}$, m variant de 1 à p, et les erreurs de prédiction rétrograde $\varepsilon_{b,n,m}$, m variant de 1à p, une erreur de prédiction rétrograde $\varepsilon_{b,n,m}$ étant l'erreur de prédiction, dans le sens rétrograde, par le modèle d'ordre m sur l'échantillon $x_{n-m}$ :

$$x_{n-m} = \varepsilon_{b,n-1,m-1} - \sum_{k=1}^{m-1} a^*_{m-1,k}\cdot x_{n-m+k}$$

ladite détermination des erreurs de prédiction directe et rétrograde se faisant à partir des relations de récurrence sur l'ordre p du modèle :

$$\begin{cases} \varepsilon_{f,n,m} = \varepsilon_{f,n,m-1} + \mu_p \cdot \varepsilon_{b,n-1,m-1} \\ \varepsilon_{b,n,m} = \varepsilon_{b,n-1,m-1} + \mu_p^* \cdot \varepsilon_{f,n,m-1} \end{cases}$$

avec:

$$\varepsilon_{f,n,0} = \varepsilon_{b,n,0} = x_n$$

- des troisièmes moyens de calcul (3) pour déterminer des termes $D*_m$, m variant de 1 à p, à partir de la relation sur les erreurs de prédiction directe et rétrograde :

$$D_m^* = \frac{2}{N-p} \sum_{n=m+1}^{N} \varepsilon_{b,n-1,m-1}^* \cdot \varepsilon_{f,n,m-1}$$

- des quatrièmes moyens de calcul (4) pour déterminer des termes $G_m$, m variant de 1 à p, à partir de la relation sur les erreurs de prédiction directe et rétrograde :

$$G_m = \frac{1}{N-p} \sum_{n=m+1}^{N} \left[ \left| \varepsilon_{f,n,m-1} \right|^2 + \left| \varepsilon_{b,n-1,m-1} \right|^2 \right]$$

**caractérisé en ce qu'**il comporte en outre :

- des cinquièmes moyens de calcul (5) pour calculer des paramètres intermédiaires $\beta_{m-1,k}$ m variant de 1 à p et k variant de 1 à m-1, à partir de la relation de définition :

$$\beta_{m-1,k} = \lambda_0 + \lambda_1 (2\pi)^2 .(m-k)^2 \qquad \text{avec } k \in [1,...,m-1]$$

$\lambda_0$ et $\lambda_1$ étant des constantes réelles positives,
- des sixièmes moyens de calcul (6) pour permettre de calculer un premier terme correctif de régularisation :

$$2. \sum_{k=1}^{m-1} \beta_{m-1,k} \cdot a_{m-1,k} \cdot a_{m-1,m-k}$$

à appliquer à la valeur du terme $D*_m$ calculé par lesdites troisièmes moyens de calcul (3),
- des septièmes moyens de calcul (7) pour permettre de calculer un deuxième terme correctif de régularisation :

$$2. \sum_{k=0}^{m-1} \beta_{m-1,k} \cdot \left| a_{m-1,k} \right|^2$$

à appliquer à la valeur du terme $G_m$ calculé par lesdites quatrièmes moyens de calcul (4), et
- des huitièmes moyens de calcul (9, 10, 11, 12) pour permettre de calculer les coefficients de réflexion $\mu_m$ à partir des signaux délivrés par lesdits troisièmes, quatrièmes, sixièmes et septièmes moyens de calcul (3, 4, 6, 7) par la relation :

$$\mu_m = -\frac{D_m^* + 2 \sum_{k=1}^{m-1} \left[ \lambda_0 + \lambda_1 .(2\pi)^2 .(k-m)^2 \right].a_{m-1,k} \cdot a_{m-1,m-k}}{G_m + 2 \sum_{k=0}^{m-1} \left[ \lambda_0 + \lambda_1 .(2\pi)^2 .(k-m)^2 \right].\left| a_{m-1,k} \right|^2}$$

et dans lequel lesdites premiers moyens de calcul(1) comprennent des moyens pour calculer les coefficients

$\{a_{p,1},...,a_{p,p}\}$ du modèle de prédiction d'ordre p, utilisent lesdits coefficients de réflexion µm.

**Patentansprüche**

1. Verfahren zur Bestimmung des Frequenzspektrums eines physikalischen getasteten Signals $\{x_n\}$, das darin besteht, die Koeffizienten $\{a_{p,k}\}$ eines Vorhersagemodells der Ordnung p zu ermitteln, die einem Vorhersagegesetz für die n-te Tastprobe $x_n$ ausgehend von den n-p vorausgegangenen Tastproben $\{x_{n-k}\}$ entsprechen, wobei k von 1 bis p variiert, gemäß der Formel

$$x_n \;=\; \varepsilon_{f,n,p} \;-\; \sum_{k=1}^{p} a_{p,k} \cdot x_{n-k},$$

wobei $\varepsilon_{f,n,p}$ ein Vorhersagefehler durch das Modell der Ordnung p in direkter Richtung für die Tastprobe $x_n$ ist, und die einen Schätzwert für die Leistung des Frequenzspektrums des getasteten Signals gemäß folgender Formel ergeben:

$$|X(f)|^2 = \frac{P_p}{\left| \sum_{k=0}^{p} a_{p,k} \cdot e^{-j2\pi kf} \right|^2}$$

wobei $a_{p,0}$ den Wert 1 hat und $P_p$ die Leistung des direkten Vorhersagefehlers des Modells der Ordnung p für die Tastprobe $x_n$ ist, wenn das Modell brauchbar ist, das heißt, wenn der Fehler ein weißes Rauschen ist, ausgehend von einem Rekurrenzgesetz der Ordnung p für das Modell gemäß folgender Form:

$$a_{p,k} = a_{p-1,k} + \mu_p \cdot a^*_{p-1,p-k},$$

wobei $*$ den Konjunktionsoperator bezeichnet,
mit $a_{p,0} = 1$; $a_{p-1,0} = 1$ und $k \in [1,...(p-1)]$,
wobei $\mu_p$ ein Reflexionskoeffizient ist, der durch die folgenden Größen bestimmt wird:

$$\begin{cases} D_p = \dfrac{2}{N-p} \displaystyle\sum_{n=p+1}^{N} \varepsilon_{b,n-1,p-1} \cdot \varepsilon^*_{f,n,p-1} \\[4mm] G_p = \dfrac{1}{N-p} \displaystyle\sum_{n=p+1}^{N} \left[ \left| \varepsilon_{f,n,p-1} \right|^2 + \left| \varepsilon_{b,n-1,p-1} \right|^2 \right] \end{cases}$$

wobei $\varepsilon_{f,n,p-1}$ der Vorhersagefehler in direkter Richtung des Vorhersagemodells der Ordnung p-1 bezüglich der Tastprobe $x_n$ und $\varepsilon_{b,n-1,p-1}$ der Fehler der Vorhersage in Rückwärtsrichtung für das Modell der Ordnung p-1 bezüglich der Tastprobe $x_{n-p}$ ist, wie folgt:

$$x_{n-p} \;=\; \varepsilon_{b,n-1,p-1} \;-\; \sum_{k=1}^{p-1} a^*_{p-1,k} \cdot x_{n-p+k};$$

**dadurch gekennzeichnet, daß** der Reflexionskoeffizient $\mu_p$ durch eine Beziehung folgender Form bestimmt wird:

$$\mu_p = -\frac{D_p^* + 2\sum_{k=1}^{p-1}\left[\lambda_0 + \lambda_1.(2\pi)^2.(k-p)^2\right].a_{p-1,k}.a_{p-1,p-k}}{G_p + 2\sum_{k=0}^{p-1}\left[\lambda_0 + \lambda_1.(2\pi)^2.(k-p)^2\right].\left|a_{p-1,k}\right|^2}$$

wobei $\lambda_0$ und $\lambda_1$ reelle positive Koeffizienten sind.

2. Verfahren zur Bestimmung des Frequenzspektrums des Mittelwerts einer Familie von I physikalischen getasteten Signalen $\{x_n\}_i$, das darin besteht, die Koeffizienten $\{a_{p,k}\}$ eines Vorhersagemodells der Ordnung p zu ermitteln, die einem Vorhersagegesetz für die n-te Tastprobe $x_{i,n}$ ausgehend von den n-p vorausgegangenen Tastproben $\{x_{i,n-k}\}$ entsprechen,
wobei k von 1 bis p variiert, gemäß der Formel:

$$x_{i,n} = \varepsilon_{f,i,n,p} - \sum_{k=1}^{p} a_{p,k} \cdot x_{i,n-k}; \quad i \in [1,\ldots I];$$

wobei $\varepsilon_{f,i,n,p}$ ein Vorhersagefehler des Modells der Ordnung p in direkter Richtung für die Tastprobe $x_{i,n}$ des Signals i ist, und die eine Schätzung für den Mittelwert der Leistungen der Frequenzspektren der getasteten Signale gemäß folgender Formel ergeben:

$$\left|X(f)\right|^2 = \frac{P_{I,p}}{\left|\sum_{k=0}^{p} a_{p,k} \cdot e^{-j2\pi kf}\right|^2}$$

wobei $a_{p,0}$ den Wert 1 hat und $P_{I,p}$ der Mittelwert der Leistungen der direkten Vorhersagefehlers des Modells der Ordnung p für die n-ten Tastproben $x_{i,n}$ der I Signale ist, wenn das Modell brauchbar ist, das heißt, wenn die Fehler ein weißes Rauschen ergeben, ausgehend von einem Rekurrenzgesetz der Ordnung p für das Modell gemäß folgender Form:

$$a_{p,k} = a_{p-1,k} + \mu_{I,p}\, a*_{p-1,p-k},$$

wobei $*$ den Konjunktionsoperator bezeichnet,
mit $a_{p,0} = 1$; $a_{p-1,0} = 1$ und $k \in [1,\ldots(p-1)]$,
wobei $\mu_{I,p}$ ein Reflexionskoeffizient ist, der durch die folgenden Größen bestimmt wird:

$$\begin{cases} D_{I,p} = \dfrac{2}{(N-p).I}\sum_{i=1}^{I}\sum_{n=p+1}^{N} \varepsilon_{b,i,n-1,p-1}.\varepsilon^*_{f,i,n,p-1} \\[4mm] G_{I,p} = \dfrac{1}{(N-p).I}\sum_{i=1}^{I}\sum_{n=p+1}^{N}\left[\left|\varepsilon_{f,i,n,p-1}\right|^2 + \left|\varepsilon^*_{b,i,n-1,p-1}\right|^2\right] \end{cases}$$

wobei $\varepsilon_{f,i,n,p-1}$ der Vorhersagefehler in direkter Richtung des Vorhersagemodells der Ordnung p-1 bezüglich der n-ten Tastprobe des Signals I und $\varepsilon_{b,i,n-1,p-1}$ der Vorhersagefehler in Rückwärtsrichtung für das Modell der Ordnung p-1 bezüglich der (n-p)-ten Tastprobe des Signals I ist:

$$x_{i,n-p} \;=\; \varepsilon_{b,i,n-1,p-1} \;-\; \sum_{k=1}^{p-1} a^{*}_{p-1,k} \cdot x_{n-p+k};$$

**dadurch gekennzeichnet, daß** der Reflexionskoeffizient $\mu_{i,p}$ durch eine Beziehung folgender Form bestimmt wird:

$$\mu_{I,p} = -\frac{D^{*}_{I,p} + 2\sum_{k=1}^{p-1}\left[\lambda_0 + \lambda_1.(2\pi)^2.(k-p)^2\right].a_{p-1,k}.a_{p-1,p-k}}{G_{I,p} + 2\sum_{k=0}^{p-1}\left[\lambda_0 + \lambda_1.(2\pi)^2.(k-p)^2\right].\left|a_{p-1,k}\right|^2}$$

wobei $\lambda_0$ und $\lambda_1$ reelle positive Koeffizienten sind.

3. Verfahren zur Bestimmung des Frequenzspektrums des Mittelwerts einer Familie von I physikalischen getasteten Signalen $\{x_n\}_i$, das darin besteht, die Koeffizienten $\{a_{p,k}\}$ eines Vorhersagemodells der Ordnung p zu ermitteln, die einem Vorhersagegesetz für die n-te Tastprobe $x_{i,n}$ ausgehend von den n-p vorausgegangenen Tastproben $\{x_{i,n-k}\}$ entsprechen,
wobei k von 1 bis p variiert, gemäß der Formel:

$$x_{i,n} \;=\; \varepsilon_{f,i,n,p} \;-\; \sum_{k=1}^{p} a_{p,k} \cdot x_{i,n-k}; \quad i \in [1,...I];$$

wobei $\varepsilon_{f,i,n,p}$ ein Vorhersagefehler des Modells der Ordnung p in direkter Richtung für die Tastprobe $x_{i,n}$ des Signals i ist, und die eine Schätzung für den Mittelwert der Leistungen der Frequenzspektren der getasteten Signale gemäß folgender Formel ergeben:

$$\left|X(f)\right|^2 = \frac{P_{I,p}}{\left|\sum_{k=0}^{p} a_{p,k}.e^{-j2\pi kf}\right|^2}$$

wobei $a_{p,0}$ den Wert 1 hat und $P_{I,p}$ der Mittelwert der Leistungen der direkten Vorhersagefehler des Modells der Ordnung p für die n-ten Tastproben $x_{i,n}$ der Signale I ist, wenn das Modell brauchbar ist, das heißt, wenn die Fehler ein weißes Rauschen ergeben, ausgehend von einem Rekurrenzgesetz der Ordnung p für das Modell gemäß folgender Form:

$$a_{p,k} = a_{p-1,k} + \mu_{I,p} \, a^{*}_{p-1,p-k},$$

wobei $*$ den Konjunktionsoperator bezeichnet,
mit $a_{p,0} = 1$; $a_{p-1,0} = 1$ und $k \in [1,...(p-1)]$,
**dadurch gekennzeichnet, daß** der Reflexionskoeffizient $\mu_{i,p}$ durch eine Beziehung folgender Form bestimmt wird:

$$\mu_{I,p} = -\frac{D_{I,p}^{'*} + 2.\sum_{k=1}^{p-1}\left[\lambda_0 + \lambda_1.(2\pi)^2.(k-p)^2\right].a_{p-1,k}.a_{p-1,p-k}}{G_{I,p}^{'} + \sum_{k=0}^{p-1}\left[\lambda_0 + \lambda_1.(2\pi)^2.(k-p)^2\right].\left|a_{p-1,k}\right|^2}$$

mit

$$\begin{cases} D_{I,p}^{'} = 2.\sum_{i=1}^{I} K(\chi_{i,p-1}^2).\sum_{n=p+1}^{N} \varepsilon_{b,i,n-1,p-1}.\varepsilon_{f,n,p-1}^{*} \\ G_{I,p}^{'} = \sum_{i=1}^{I} K(\chi_{i,p-1}^2).\sum_{n=p+1}^{N}\left[\left|\varepsilon_{f,i,n,p-1}\right|^2 + \left|\varepsilon_{b,i,n-1,p-1}\right|^2\right] \end{cases}$$

wobei die Gewichtung $K(\chi^2_{i,p-1})$ durch folgenden Ausdruck gegeben ist

$$K(\chi_{i,p-1}^2) = \frac{P(\chi_{i,p-1}^2 / s_j = 1).P(s_i = 1)}{P(\chi_{i,p-1}^2 / s_j = 1).P(s_i = 1) + P(\chi_{i,p-1}^2 / s_i = 0).P(s_i = 0)}$$

wobei $s_i = 1$ gilt, wenn die Zelle i des Schätzfensters nur Störsignale enthält, und $s_i = 0$ gilt, wenn die Zelle i des Schätzfensters ein Ziel enthält, und wobei $P(s_i=1)$ unabhängig vom Wert i der vorab bestimmten Wahrscheinlichkeit $p_1$ gleicht, daß eine Zelle des Schätzfensters nur Störzeichen enthält, während $P(s_i=0)$ unabhängig von i der vorab bestimmten Wahrscheinlichkeit gleicht, daß eine Zelle des Schätzfensters ein Ziel enthält, und wobei $p_1$ und $p_0$ durch die Beziehung $p_0 + p_1 = 1$ verknüpft sind, und wobei die Variable $\chi^2_{i,p-1}$ folgenden Wert hat:

$$\chi_{i,p-1}^2 = \frac{\sum_{n=p=1}^{N}\left[\left|\varepsilon_{f,i,n,p-1}\right|^2 + \left|\varepsilon_{b,i,n-1,p-1}\right|^2\right]}{P_{I,p-1}}$$

in dem $\varepsilon_{f,i,p-1}$ einen Vorhersagefehler in direkter Richtung des Vorhersagemodells der Ordnung p-1 bezüglich der n-ten Tastprobe des Signals I und $\varepsilon_{b,i,n-1,p-1}$ den Vorhersagefehler in Rückwärtsrichtung des Modells der Ordnung p-1 bezüglich der (n-p)-ten Tastprobe des Signals I bezeichnet:

$$x_{i,n-p} = \varepsilon_{b,i,n-1,p-1} - \sum_{k=1}^{p-1} a_{p-1,k}^{*}.x_{n-p+k};$$

und wobei $P_{I,p-1}$ der Mittelwert der Leistung der Vorhersagefehler des Modells der Ordnung p-1 ist.

**4.** Vorrichtung zur Bestimmung des Frequenzspektrums einer physikalischen getasteten Signals $\{x_n\}$,

- mit ersten Rechenmitteln (1) zur Ermittlung der Koeffizienten $\{a_{p,1},...,a_{p,p}\}$ eines Vorhersagemodells der Ordnung p, die einem Vorhersagegesetz für die n-te Tastprobe $x_n$ ausgehend von den n-p vorausgegangenen

Tastproben $\{x_{n-k}\}$ entsprechen, wobei k von 1 bis p variiert, gemäß der Formel

$$x_n = \varepsilon_{f,n,p} - \sum_{k=1}^{p} a_{p,k} \cdot x_{n-k},$$

wobei $\varepsilon_{f,n,p}$ ein Vorhersagefehler des Modells der Ordnung p in direkter Richtung für die Tastprobe $x_n$ ist, und die Mittel aufweisen, um einen Schatzwert für die Leistung des Frequenzspektrums des getasteten Signals gemäß folgender Formel zu ergeben:

$$|X(f)|^2 = \frac{P_p}{\left|\sum_{k=0}^{p} a_{p,k} \cdot e^{-j2\pi kf}\right|^2}$$

wobei $a_{p,o}$ den Wert 1 hat und $P_p$ die Leistung des direkten Vorhersagefehlers des Modells der Ordnung p für die Tastprobe $x_n$ ist, wenn das Modell brauchbar ist, das heißt, wenn der Fehler ein weißes Rauschen ist, ausgehend von einem Rekurrenzgesetz der Ordnung p für das Modell gemäß folgender Form:

$$a_{p,k} = a_{p-1,k} + \mu_p \cdot a*_{p-1,p-k},$$

wobei $*$ den Konjunktionsoperator bezeichnet,
mit $a_{p,0} = 1$; $a_{p-1,0} = 1$ und $k \in [1, ....p-1]$,
wobei $\mu_p$ ein Reflexionskoeffizient ist,

- mit zweiten Rechenmitteln (2), die die Struktur eines Filternetzes aufweisen, um die direkten Vorhersagefehler $\varepsilon_{f,n,m}$ und die Fehler $\varepsilon_{b,n,m}$ der rückwärts gerichteten Vorhersage zu bestimmen, wobei m von 1 bis p variiert und wobei ein Vorhersagefehler $\varepsilon_{b,n,m}$ in Rückwärtsrichtung der Vorhersagefehler in Rückwärtsrichtung des Modells der Ordnung m für die Tastprobe $x_{n-m}$ ist:

$$x_{n-m} = \varepsilon_{b,n-1,m-1} - \sum_{k=1}^{m-1} a*_{m-1,k} \cdot x_{n-m+k};$$

wobei die Bestimmung der Fehler der direkten und rückwärtsgerichteten Vorhersage ausgehend von den Rekurrenzbeziehungen der Ordnung p des Modells erfolgt:

$$\begin{cases} \varepsilon_{f,n,m} = \varepsilon_{f,n,m-1} + \mu_p \cdot \varepsilon_{b,n-1,m-1} \\ \varepsilon_{b,n,m} = \varepsilon_{b,n-1,m-1} + \mu*_p \cdot \varepsilon_{f,n,m-1} \end{cases}$$

mit $\varepsilon_{f,n,0} = \varepsilon_{b,n,0} = x_n$

- mit dritten Rechenmitteln (3) zur Bestimmung der Größen $D*_m$, ausgehend von der Beziehung über die Fehler der direkten und rückwärtsgerichteten Vorhersage, wobei m von 1 bis p variiert:

$$D_m^* = \frac{2}{N-p} \sum_{n=m+1}^{N} \varepsilon_{b,n-1,m-1}^* \cdot \varepsilon_{f,n,m-1}$$

- mit vierten Rechenmitteln (4) zur Bestimmung der Größen $G_m$, ausgehend von der Beziehung über die direkten und rückwärtsgerichteten Vorhersagefehler, wobei m von 1 bis p variiert:

$$G_m = \frac{1}{N-p} \sum_{n=m+1}^{N} \left[ \left| \varepsilon_{f,n,m-1} \right|^2 + \left| \varepsilon_{b,n-1,m-1} \right|^2 \right]$$

**dadurch gekennzeichnet, daß** sie außerdem aufweist:

- fünfte Rechenmittel (5) zur Berechnung von Zwischenparametern $\beta_{m-1,k}$, wobei m von 1 bis p und k von 1 bis m-1 variiert, ausgehend von der Definitionsbeziehung:

$$\beta_{m-1,k} = \lambda_0 + \lambda_1 (2\pi)^{2\cdot}(m\text{-}k)^2; \text{ mit } k \in [1, ..., (m\text{-}1)];$$

wobei $\lambda_0$ und $\lambda_1$ positive reelle Konstante sind,

- mit sechsten Rechenmitteln (6), die die Berechnung einer ersten korrigierenden Regulierungsgröße erlauben:

$$2 \cdot \sum_{k=1}^{m-1} \beta_{m-1,k} \cdot a_{m-1,k} \cdot a_{m-1,m-k};$$

welche auf den Wert der Größe $D*_m$ angewandt wird, der von den dritten Rechenmitteln berechnet wurde,
- und mit siebten Rechenmitteln (7), die die Berechnung einer zweiten korrigierenden Regulierungsgröße erlauben:

$$2 \cdot \sum_{k=0}^{m-1} \beta_{m-1,k} \cdot \left| a_{m-1,k} \right|^2;$$

die auf die Größe $G_m$ angewandt wird, die von den vierten Rechenmitteln (4) berechnet wurde,
- und achte Rechenmittel (9, 10, 11, 12), die die Berechnung der Reflexionskoeffizienten $\mu_m$ ausgehend von den von den dritten, vierten, sechsten und siebten Rechenmitteln (3, 4, 6, 7) gelieferten Signalen gemäß folgender Beziehung erlauben:

$$\mu_m = -\frac{D_m^* + 2\sum_{k=1}^{m-1}\left[\lambda_0 + \lambda_1 \cdot (2\pi)^2 \cdot (k-m)^2\right] \cdot a_{m-1,k} \cdot a_{m-1,m-k}}{G_m + 2\sum_{k=0}^{m-1}\left[\lambda_0 + \lambda_1 \cdot (2\pi)^2 \cdot (k-m)^2\right] \cdot \left| a_{m-1,k} \right|^2}$$

und wobei die ersten Rechenmittel (1) Mittel zur Berechnung der Koeffizienten $\{a_{p,1}, ... a_{p,p}\}$ des Vorhersagemodells der Ordnung p unter Verwendung der Reflexionskoeffizienten $\mu_m$ enthalten.

## Claims

1. Method for determining the frequency spectrum of a sampled physical signal $\{x_n\}$ consisting in evaluating the coefficients $\{a_{p,k}\}$ of a prediction model of order p which correspond to a law for predicting the $n^{th}$ sample $x_n$ from the previous n-p samples $\{x_{n-k}\}$, k varying from 1 to p, of the form:

$$x_n = \varepsilon_{f,n,p} - \sum_{k=1}^{p} a_{p,k} \cdot x_{n-k}$$

where $\varepsilon_{f,n,p}$ is a prediction error, in the forwards direction, by the model of order p, of the sample $x_n$, and which give an estimate of the power of the frequency spectrum of the sampled signal in the form:

$$|X(f)|^2 = \frac{P_p}{\left| \sum_{k=0}^{p} a_{p,k} \cdot e^{-j2\pi kf} \right|^2}$$

where $a_{p,0}$ equals 1 and where $P_p$ is the power of the error of forwards prediction of the model of order p for the sample $x_n$ when the model is reliable, that is to say when the said error is white noise, from a recurrence law in the order p of the model of the form:

$$a_{p,k} = a_{p-1,k} + \mu_p \cdot a^*_{p-1,p-k}$$

$*$ designating the conjugate operator,
with:

$$a_{p,0} = 1$$

$$a_{p-1,0} = 1$$

$$k \in [1,..p-1]$$

$\mu_p$ being a reflection coefficient determined from the terms:

$$\begin{cases} D_p = \dfrac{2}{N-P} \sum_{n=p+1}^{N} \varepsilon_{b,n-1,p-1} \cdot \varepsilon^*_{f,n,p-1} \\ G_p = \dfrac{1}{N-P} \sum_{n=p+1}^{N} \left[ |\varepsilon_{f,n,p-1}|^2 + |\varepsilon_{b,n-1,p-1}|^2 \right] \end{cases}$$

where $\varepsilon_{f,n,p-1}$ designates the prediction error, in the forwards direction, by the prediction model of order p-1, in the sample $x_n$ and $\varepsilon_{b,n-1,p-1}$ the prediction error in the backwards direction, by the model of order p-1, in the sample $x_{n-p}$ :

$$x_{n-p} = \varepsilon_{b,n-1,p-1} - \sum_{k=1}^{p-1} a^*_{p-1,k} \cdot x_{n-p+k}$$

this method being **characterized in that** the reflection coefficient $\mu_p$ is determined through a relationship of the form:

$$\mu_p = -\frac{D_p^* + 2\sum_{k=1}^{p-1}\left[\lambda_0 + \lambda_1.(2\pi)^2.(k-p)^2\right].a_{p-1,k}.a_{p-1,p-k}}{G_p + 2\sum_{k=0}^{p-1}\left[\lambda_0 + \lambda_1.(2\pi)^2.(k-p)^2\right].\left|a_{p-1,k}\right|^2}$$

where $\lambda_0$ and $\lambda_1$ are positive real coefficients.

2. Method for determining the frequency spectrum of the mean of a family of I sampled physical signals $\{x_n\}_i$ consisting in evaluating the coefficients $\{a_{p,k}\}$ of a prediction model of order p which correspond to a law for predicting the $n^{th}$ sample $x_{i,n}$ from the previous n-p samples $\{x_{i,n-k}\}$, k varying from 1 to p, of the form:

$$x_{i,n} = \varepsilon_{f,i,n,p} - \sum_{k=1}^{p}a_{p,k}.x_{i,n-k} \qquad i \in [1,...,I]$$

where $\varepsilon_{f,i,n,p}$ is a prediction error, in the forwards direction, by the model of order p, of the sample $x_{i,n}$ of the signal i and which give an estimate of the mean of the powers of the frequency spectra of the sampled signals in the form:

$$\left|X(f)\right|^2 = \frac{P_{I,p}}{\left|\sum_{k=0}^{p}a_{p,k}.e^{-j2\pi kf}\right|^2}$$

where $a_{p,0}$ equals 1 and where $p_{I,p}$ is the mean of the powers of the errors of forwards prediction of the model of order p for the $n^{th}$ samples $x_{i,n}$ of the I signals when the model is reliable, that is to say when the said errors are white noise, from a recurrent law in the order p of the model of the form:

$$a_{p,k} = a_{p-1,k} + \mu_{I,p}.a_{p-1,p-k}^*$$

∗designating the conjugate operator,
with:

$$a_{p,0} = 1$$

$$a_{p-1,0} = 1$$

$$k \in [1,...p-1]$$

$\mu_{I,p}$ being a reflection coefficient, determined from the terms:

$$\begin{cases} D_{I,p} = \dfrac{2}{(N-p).I} \sum_{i=1}^{I} \sum_{n=p+1}^{N} \varepsilon_{b,i,n-1,p-1} \cdot \varepsilon^*_{f,i,n,p-1} \\[2em] G_{I,p} = \dfrac{1}{(N-p).I} \sum_{i=1}^{I} \sum_{n=p+1}^{N} \left[ \left|\varepsilon_{f,i,n,p-1}\right|^2 + \left|\varepsilon^*_{b,i,n-1,p-1}\right|^2 \right] \end{cases}$$

where $\varepsilon_{f,i,n,p-1}$ designates the prediction error, in the forwards direction, by the prediction model of order p-1, in the $n^{th}$ sample of the $^{th}$ signal and $\varepsilon_{b,i,n-1,p-1}$ the prediction error, in the backwards direction, by the model of order p-1, in the n-p$^{th}$ sample of the $^{th}$ signal:

$$x_{i,n-p} = \varepsilon_{b,i,n-1,p-1} - \sum_{k=1}^{p-1} a^*_{p-1,k} \cdot x_{n-p+k}$$

this method being **characterized in that** the reflection coefficient $\mu_{I,p}$ is determined through a relationship of the form:

$$\mu_{I,p} = -\frac{D^*_{I,p} + 2\sum_{k=1}^{p-1}\left[\lambda_0 + \lambda_1.(2\pi)^2.(k-p)^2\right].a_{p-1,k}.a_{p-1,p-k}}{G_{I,p} + 2\sum_{k=0}^{p-1}\left[\lambda_0 + \lambda_1.(2\pi)^2.(k-p)^2\right].\left|a_{p-1,k}\right|^2}$$

where $\lambda_0$ and $\lambda_1$ are positive real coefficients.

3. Method for determining the frequency spectrum of the mean of a family of I sampled physical signals $\{x_n\}_i$ consisting in evaluating the coefficients $\{a_{p,k}\}$ of a prediction model of order p which correspond to a law for predicting the $n^{th}$ sample $x_{i,n}$ from the previous n-p samples $\{x_{i,n-k}\}$, k varying from 1 to p, of the form:

$$x_{i,n} = \varepsilon_{f,i,n,p} - \sum_{k=1}^{p} a_{p,k} \cdot x_{i,n-k} \qquad i \in [1,...,I]$$

where $\varepsilon_{f,i,n,p}$ is a prediction error, in the forwards direction, by the model of order p, of the sample $x_{i,n}$ of the signal i and which give an estimate of the mean of the powers of the frequency spectra of the sampled signals in the form:

$$\left|X(f)\right|^2 = \frac{P_{I,p}}{\left|\sum_{k=0}^{p} a_{p,k} \cdot e^{-j2\pi kf}\right|^2}$$

where $a_{p,0}$ equals 1 and where $p_{I,p}$ is the mean of the powers of the errors of forwards prediction of the model of order p for the $n^{th}$ samples $x_{i,n}$ of the I signals when the model is reliable, that is to say when the said errors are white noise, from a recurrence law in the order p of the model of the form:

$$a_{p,k} = a_{p-1,k} + \mu_{I,p}.a^*_{p-1,p-k}$$

*designating the conjugate operator,
with:

$$a_{p,0} = 1$$

$$a_{p-1,0} = 1$$

$$k \in [1,...p-1]$$

**characterized in that** the reflection coefficient $\mu_{I,p}$ is defined by the relationship:

$$\mu_{I,p} = -\frac{D^{'*}_{I,p} + 2.\sum_{k=1}^{p-1}\left[\lambda_0 + \lambda_1.(2\pi)^2.(k-p)^2\right].a_{p-1,k}.a_{p-1,p-k}}{G^{'}_{I,p} + \sum_{k=0}^{p-1}\left[\lambda_0 + \lambda_1.(2\pi)^2.(k-p)^2\right].\left|a_{p-1,k}\right|^2}$$

with

$$\begin{cases} D^{'}_{I,p} = 2.\sum_{i=1}^{I}K\left(\chi^2_{i,p-1}\right).\sum_{n=p+1}^{N}\varepsilon_{b,i,n-1,p-1}.\varepsilon^*_{f,n,p-1} \\ G^{'}_{I,p} = \sum_{i=1}^{I}K\left(\chi^2_{i,p-1}\right).\sum_{n=p+1}^{N}\left[\left|\varepsilon_{f,i,n,p-1}\right|^2 + \left|\varepsilon_{b,i,n-1,p-1}\right|^2\right] \end{cases}$$

where the weighting $K(X^2_{i,p-1})$ is expressed as follows :

$$K\left(\chi^2_{i,p-1}\right) = \frac{P\left(\chi^2_{i,p-1} / s_j = 1\right).P(s_i = 1)}{P\left(\chi^2_{i,p-1} / s_j = 1\right).P(s_i = 1) + P\left(\chi^2_{i,p-1} / s_i = 0\right).P(s_i = 0)}$$

$s_i$ being equal to 1 if cell i of the estimation window contains only clutter and to 0 if cell i of the estimation window contains a target, $P(s_i = 1)$ being equal, irrespective of i, to the a priori probability $p_1$ that a cell of the estimation window contains only clutter $P(s_i = 0)$ being equal irrespective of i, to the a priori probability that a cell of the estimation window contains a target, $p_1$ and $p_0$ being linked by the relationship:

$$p_0 + p_1 = 1$$

and the variable $X^2_{i,p-1}$ being equal to:

$$\chi^2_{i,p-1} = \frac{\sum_{n=p=1}^{N} \left[ \left| \varepsilon_{f,i,n,p-1} \right|^2 + \left| \varepsilon_{b,i,n-1,p-1} \right|^2 \right]}{P_{I,p-1}}$$

where $\varepsilon_{f,i,n,p}$-1 designating the prediction error, in the forwards direction, by the prediction model of order p-1, in the n$^{th}$ sample of the $^{th}$ signal, $\varepsilon_{b,i,n-1,p-1}$, the prediction error, in the backwards direction, by the model of order p-1, in the n-p$^{th}$ sample of the $^{th}$ signal:

$$x_{i,n-p} = \varepsilon_{b,i,n-1,p-1} - \sum_{k=1}^{p-1} a^*_{p-1,k} \cdot x_{n-p+k}$$

and $P_{I,p-1}$ the mean of the powers of the prediction errors of the model of order p-1.

4. Device for determining the frequency spectrum of a sampled physical signal $\{x_n\}$ comprising:

- first computation means (1) for evaluating the coefficients $\{a_{p,1},...a_{p,p}\}$ of a prediction model of order p, which correspond to a law for predicting the n$^{th}$ sample $x_n$ from the previous n-p samples $\{x_{n-k}\}$ k varying from 1 to p, from the form:

$$x_n = \varepsilon_{f,n,p} - \sum_{k=1}^{p} a_{p,k} \cdot x_{n-k}$$

where $\varepsilon_{f,n,p}$ is a prediction error, in the forwards direction, by the model of order p, of the sample $x_n$, and comprise means for giving an estimate of the power of the frequency spectrum of the sampled signal in the form:

$$\left| X(f) \right|^2 = \frac{P_p}{\left| \sum_{k=0}^{p} a_{p,k} \cdot e^{-j2\pi k f} \right|^2}$$

where $a_{p,0}$ equals 1 and where $P_p$ is the power of the error of forwards prediction of the model of order p for the sample $x_n$ when the model is reliable, that is to say when the said error is white noise, from a recurrence law in the order p of the model of the form:

$$a_{p,k} = a_{p-1,k} + \mu_p \cdot a^*_{p-1,p-k}$$

∗ designating the conjugate operator,
with:

$$a_{p,0} = 1$$

$$a_{p-1,0} = 1$$

$$k \in [1,...p\text{-}1]$$

$\mu_p$ being a reflection coefficient,

- second computation means (2) having the structure of a trellis filter for determining the forwards prediction errors $\varepsilon_{f,n,m,}$ m varying from 1 to p, and the backwards prediction errors $\varepsilon_{b,n,m,}$ m varying from 1 to p, a backwards prediction error $\varepsilon_{b,n,m,}$ being the prediction error, in the backwards direction, by the model of order m in the sample $x_{n-m}$ :

$$x_{n-m} = \varepsilon_{b,n-1,m-1} - \sum_{k=1}^{m-1} a^*_{m-1,k} \cdot x_{n-m+k}$$

- the said determination of the forwards and backwards prediction errors being made on the basis of the recurrence relationships in the order p of the model:

$$\begin{cases} \varepsilon_{f,n,m} = \varepsilon_{f,n,m-1} + \mu_p \cdot \varepsilon_{b,n-1,m-1} \\ \varepsilon_{b,n,m} = \varepsilon_{b,n-1,m-1} + \mu^*_p \cdot \varepsilon_{f,n,m-1} \end{cases}$$

with

$$\varepsilon_{f,n,0} = \varepsilon_{b,n,0} = x_n$$

- third computation means(3) for determining terms $D*_m$, m varying from 1 to p, from the relationship in the forwards and backwards prediction errors:

$$D^*_m = \frac{2}{N-P} \sum_{n=m+1}^{N} \varepsilon^*_{b,n-1,m-1} \cdot \varepsilon_{f,n,m-1}$$

- fourth computation means (4) for determining terms $G_m$, m varying from 1 to p, from the relationship in the forwards and backwards prediction errors.

$$G_m = \frac{1}{N-P} \sum_{n=m+1}^{N} \left[ \left| \varepsilon_{f,n,m-1} \right|^2 + \left| \varepsilon_{b,n-1,m-1} \right|^2 \right]$$

**characterized in that** it furthermore comprises:

- fifth computation means (5) for computing intermediate parameters $\beta_{m-1,k}$ m varying from 1 to p and k varying from 1 to m-1, from the defining relationship:

$$\beta_{m-1,k} = \lambda_0 + \lambda_1 (2\pi)^2 .(m-k)^2 \qquad \text{with } k \in [1,...,m-1]$$

$\lambda_0$ and $\lambda_1$ being positive real constants,

- sixth computation means (6) for making it possible to compute a first corrective regularization term:

$$2. \sum_{k=1}^{m-1} \beta_{m-1,k} \cdot a_{m-1,k} \cdot a_{m-1,m-k} \quad ;$$

to be applied to the value of the term $D*_m$ computed by the said third computation means (3),

- seventh computation means (7) for making it possible to compute a second corrective regularization term:

$$2. \sum_{k=0}^{m-1} \beta_{m-1,k} \cdot |a_{m-1,k}|^2$$

to be applied to the value of the term $G_m$ computed by the said fourth computation means (4), and

- eighth computation means (9,10,11,12) making it possible to compute the reflection coefficients $\mu_m$ from the signals delivered by the said third, fourth, sixth, and seventh computation means (3,4,6,7) through the relationship:

$$\mu_m = - \frac{D_m^* + 2 \sum_{k=1}^{m-1} \left[ \lambda_0 + \lambda_1 .(2\pi)^2 .(k-m)^2 \right] . a_{m-1,k} . a_{m-1,m-k}}{G_m + 2 \sum_{k=0}^{m-1} \left[ \lambda_0 + \lambda_1 .(2\pi)^2 .(k-m)^2 \right] . |a_{m-1,k}|^2}$$

and in which the said first computation means (1) comprise means for computing the coefficients $\{a_{p,1},...a_{p,p}\}$ of the prediction model of order p, use the said reflection coefficients $\mu_m$.

FIG.1

FIG.2

FIG.3

FIG.4

FIG.5